(19) Europäisches Patentamt
European Patent Office
Office européen des brevets

(11) EP 2 018 389 B1

(12) **EUROPEAN PATENT SPECIFICATION**

(45) Date of publication and mention of the grant of the patent:
**09.03.2016 Bulletin 2016/10**

(21) Application number: **07756089.4**

(22) Date of filing: **26.04.2007**

(51) Int Cl.:
***C07F 7/00*** *(2006.01)* ***C08F 10/00*** *(2006.01)*
***C08F 210/00*** *(2006.01)* ***C08F 4/659*** *(2006.01)*

(86) International application number:
**PCT/US2007/010200**

(87) International publication number:
**WO 2007/130305 (15.11.2007 Gazette 2007/46)**

(54) **HAFNIUM COMPLEXES OF CARBAZOLYL SUBSTITUTED IMIDAZOLE LIGANDS**

HAFNIUMKOMPLEXE AUS CARBAZOLYL-SUBSTITUIERTEN IMIDAZOLLIGANDEN

COMPLEXES D'HAFNIUM DE LIGANDS IMIDAZOLES À SUBSTITUTION CARBAZOLYLE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **05.05.2006 US 798068 P**
**19.09.2006 US 845623 P**

(43) Date of publication of application:
**28.01.2009 Bulletin 2009/05**

(73) Proprietor: **Dow Global Technologies LLC**
**Midland, MI 48674 (US)**

(72) Inventors:
- **BOONE, Harold, W.**
  **Sugar Land, TX 77479 (US)**
- **COALTER, Joseph, N., III**
  **Katy, TX 77450 (US)**
- **FRAZIER, Kevin, A.**
  **Midland, MI 48642 (US)**
- **IVERSON, Carl, N.**
  **Houston, TX 77005 (US)**
- **MUNRO, Ian, M.**
  **Houston, TX 77019 (US)**
- **PEIL, Kevin, P.**
  **Auburn, MI 48611 (US)**
- **VOSEJPKA, Paul, C.**
  **Midland, MI 48640 (US)**

(74) Representative: **Beck Greener**
**Fulwood House**
**12 Fulwood Place**
**London WC1V 6HR (GB)**

(56) References cited:
**WO-A-2006/036748**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 018 389 B1

## Description

BACKGROUND OF THE INVENTION

This invention is directed to certain hafnium complexes, to catalyst compositions comprising the same, and to addition polymerization processes, especially olefin polymerization processes, using such hafnium complexes as one component of a coordination polymerization catalyst composition.

Advances in polymerization and catalysis have resulted in the capability to produce many new polymers having improved physical and chemical properties useful in a wide variety of superior products and applications. With the development of new catalysts the choice of polymerization-type (solution, slurry, high pressure or gas phase) for producing a particular polymer has been greatly expanded. Also, advances in polymerization technology have provided more efficient, highly productive and economically enhanced processes. Recently, several new disclosures related to metal complexes based on polyvalent metal-centered, heteroaryl donor ligands have published. Among these are USP 6,103,657, USP 6,320,005, USP 6,653,417, USP 6,637,660, USP 6,906,160, USP 6,919,407, USP 6,927,256, USP 6,953,764, US-A-2002/0142912, US-A-2004/0220050, US-A-2004/0005984, EP-A-874,005, EP-A-791,609, WO 2000/20377, WO 2001/30860, WO 2001/46201, WO 2002/ 24331, WO 2002/38628, WO 2003/040195, WO 2004/94487, WO 2006/20624, and WO 2006/36748.

Regardless of the technological advances in the polyolefin industry afforded by this new class of catalyst, common problems, as well as new challenges associated with process operability exist. In particular, metal complexes that have high catalyst activity especially at higher use temperatures are particularly desired. It has now been discovered that improved catalysts for polymerization of olefins, especially propylene or mixtures of propylene with one or more comonomers, are prepared by employing the present metal complexes in combination with standard or known cocatalysts.

Thus, it would be advantageous to provide a catalyst composition for the polymerization of olefin monomers employing specific metal complexes based on donor ligands that are capable of operation at high temperatures and efficiencies. Moreover, it would be advantageous to provide a polymerization process for preparing tactic polymers, especially isotactic polypropylene, and copolymers comprising propylene and one or more $C_{4-20}$ olefins and/or ethylene.

SUMMARY OF THE INVENTION

According to the present invention there is provided a catalyst composition suitable for use in the coordination polymerization of an olefin comprisinga metal complex corresponding to the formula:

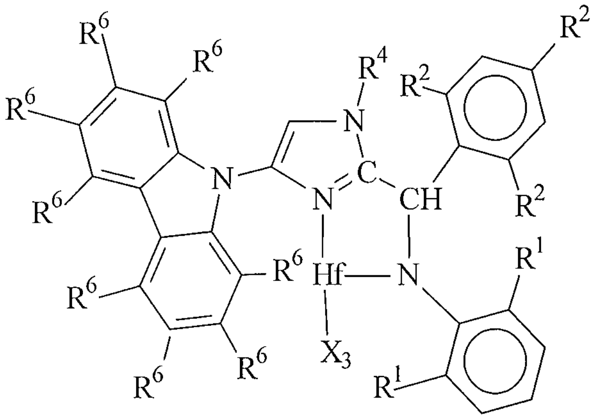

wherein, X independently each occurrence is hydride, halide or a $C_{1-20}$ hydrocarbyl, trihydrocarbylsilyl, halocarbyl, or trihydrocarbylsilylhydrocarbyl group;

$R^1$ independently each occurrence is hydrogen, halogen, or a univalent, polyatomic anionic ligand, or two or more $R^1$ groups are joined together thereby forming a polyvalent fused ring system;

$R^2$ independently each occurrence is hydrogen, halogen, or a univalent, polyatomic anionic ligand, or two or more $R^2$ groups are joined together thereby forming a polyvalent fused ring system;

$R^4$ is hydrogen, alkyl, aryl, aralkyl, trihydrocarbylsilyl, or trihydrocarbylsilylmethyl of from 1 to 20 carbons; and

$R^6$ is hydrogen or an alkyl, cycloalkyl, aryl, or aralkyl group of up to 20 atoms other than hydrogen;

an activating cocatalyst; and

a support, wherein the support is a particulated compound selected from the oxides, sulfides, nitrides or carbides of a Group 13 or 14 metal or metalloid.

Preferred complexes according to the invention are those corresponding to the foregoing formula wherein $R^4$ is $C_{1-4}$ alkyl, $R^6$ each occurrence is hydrogen, and X each occurrence is $C_{1-20}$ alkyl, cycloalkyl or aralkyl.

Additionally, according to the present invention there is provided a catalyst composition comprising one or more of the foregoing hafnium complexes of the present formula and an activating cocatalyst capable of converting said metal complex into an active catalyst for addition polymerization. Additional components of such catalyst composition may include a liquid solvent or diluent, a tertiary component such as a scavenger or secondary activator, a support, and/or one or more additives or adjuvants such as processing aids, sequestrants, chain transfer agents, and/or chain shuttling agents.

In addition, the present invention provides an addition polymerization process, especially an olefin polymerization process, wherein one or more addition polymerizable monomers are polymerized in the presence of the foregoing catalyst composition, including the preferred and more preferred embodiments thereof, to form a high molecular weight polymer. Preferred polymerization processes are solution polymerizations, most preferably processes wherein ethylene, propylene, mixtures of ethylene and propylene, or mixtures of ethylene and/or propylene with one or more $C_{4-20}$ olefins or diolefins are polymerized or copolymerized. Desirably, the processes are capable of operation at high catalyst efficiencies to prepare polymers having desirable physical properties.

Highly desirably, the present invention provides a process wherein one or more addition polymerizable monomers are polymerized under solution polymerization conditions in the presence of the foregoing catalyst composition to form a high molecular weight tactic polymer, especially a polymer that is isotactic or highly isotactic, with improved operating efficiency.

The metal complexes and catalysts of the invention may be combined with other metal complexes or catalyst compositions and the polymerization process may be used in series or in parallel with one or more other polymerization processes. Suitable additional polymerization catalyst compositions for use in combination with the metal complexes of the present invention include conventional Ziegler-Natta-type transition metal polymerization catalysts as well as $\pi$-bonded transition metal compounds such as metallocene-type catalysts, constrained geometry or other transition metal complexes, including other donor ligand complexes.

Catalyst compositions comprising the present metal complexes may be employed in olefin polymerizations to prepare polymers and copolymers for use in injection molding applications as well as for use in preparing fibers, especially by means of melt-blown or extrusion spinning processes. Moreover, the polymers are usefully employed in adhesive formulations or in multi-layer films and laminates.

## DETAILED DESCRIPTION OF THE INVENTION

All reference to the Periodic Table of the Elements herein shall refer to the Periodic Table of the Elements, published and copyrighted by CRC Press, Inc., 2003. Unless stated to the contrary, clear from the context, or conventional in the art, all parts and percents are based on weight. Also, any reference to a Group or Groups shall be to the Group or Groups as reflected in this Periodic Table of the Elements using the IUPAC system for numbering groups.

The term "comprising" and derivatives thereof is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability or novelty. The term "consisting of" excludes any component, step or procedure not specifically delineated or listed. The term "or", unless stated otherwise, refers to the listed members individually as well as in any combination.

The term "hetero" or "hetero-atom" refers to a non-carbon atom, especially Si, B, N, P, S, or O. "Heteroaryl", "heteroalkyl", "heterocycloalkyl" and "heteroaralkyl" refer to aryl, alkyl, cycloalkyl, or aralkyl groups respectively, in which at least one carbon atom is replaced by a heteroatom. "Inertly substituted" refers to substituents on a ligand that neither destroy operability of the invention nor the ligand’s identity. For example, an alkoxy group is not a substituted alkyl group. Preferred inert substituents are halo, di($C_{1-6}$ hydrocarbyl)amino, $C_{2-6}$ hydrocarbyleneamino, $C_{1-6}$ halohydrocarbyl, and tri($C_{1-6}$ hydrocarbyl)silyl. The term "polymer", as used herein, includes both homopolymers, that is, polymers prepared from a single reactive compound, and copolymers, that is, polymers prepared by reaction of at least two polymer forming reactive, monomeric compounds. The term "crystalline" refers to a polymer that exhibits an X-ray diffraction pattern at 25 °C and possesses a first order transition or crystalline melting point (Tm) from the differential scanning calorimetry heating curve. The term may be used interchangeably with the term "semicrystalline".

The term, "chain transfer agent" refers to a chemical substance that is able to transfer a growing polymer chain to all or a portion of the agent, thereby replacing the active catalyst site with a catalytically inactive species. By the term, "chain shuttling agent" is meant a chain transfer agent that is capable of transferring the growing polymer chain to the agent and thereafter, transferring the polymer chain back to the same or a different active catalyst site, wherein polymerization may resume. A chain shuttling agent is distinguished from a chain transfer agent in that polymer growth is

interrupted but not generally terminated due to interaction with said agent.

The invention is directed toward the previously identified, novel metal complexes and catalyst compositions comprising the same. The invention also relates to an olefin polymerization process, especially a process for polymerization of propylene, having improved operability and product capabilities using the present metal complexes.

Suitable X groups in the present metal complexes include halide, hydride, hydrocarbyl, hydrocarbyloxy, amide, and halocarbyl. Examples include chloride, trifluoromethyl, methyl, phenyl, benzyl, cyclohexyl, tosylate, triflate, mesitylate, and n-butyl. Preferred metal complexes according to the invention are those wherein X is a $C_{1-20}$ alkyl or aralkyl group, and more preferably all X groups are the same and are $C_{1-12}$ alkyl or aralkyl group, most preferably methyl, benzyl, n-butyl, n-octyl or n-dodecyl.

Morse preferred metal complexes according to the present invention are dibenzopyrolyl- (carbazolyl-) substituted imidazole derivatives corresponding to the formula:

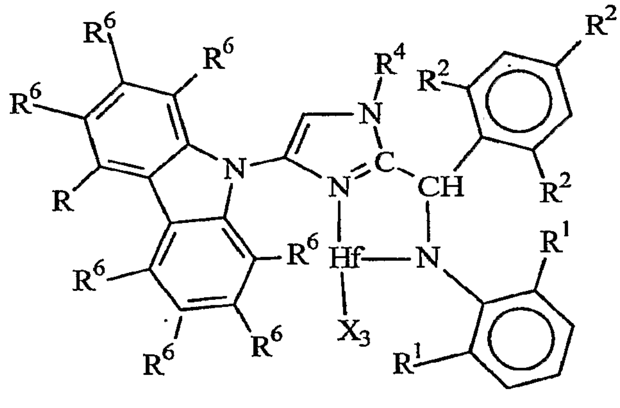

,

wherein,

$R^1$ independently each occurrence is a $C_{3-12}$ alkyl group wherein the carbon attached to the phenyl ring is secondary or tertiary substituted, preferably each $R^1$ is isopropyl;
$R^2$ independently each occurrence is hydrogen or a $C_{1-12}$ alkyl group, preferably at least one ortho-$R^2$ group is methyl, ethyl or $C_{3-12}$ alkyl wherein the carbon attached to the phenyl ring is secondary or tertiary substituted;
$R^3$ is hydrogen, halo or $R^1$;
$R^4$ is $C_{1-4}$ alkyl;
$R^6$ is hydrogen or $C_{1-6}$ alkyl; and
X is hydride, halide or a $C_{1-20}$ hydrocarbyl, trihydrocarbylsilyl, halocarbyl, or trihydrocarbylsilylhydrocarbyl group.

Most highly preferred metal complexes are dibenzopyrolyl- substituted imidazole derivatives of the formula:

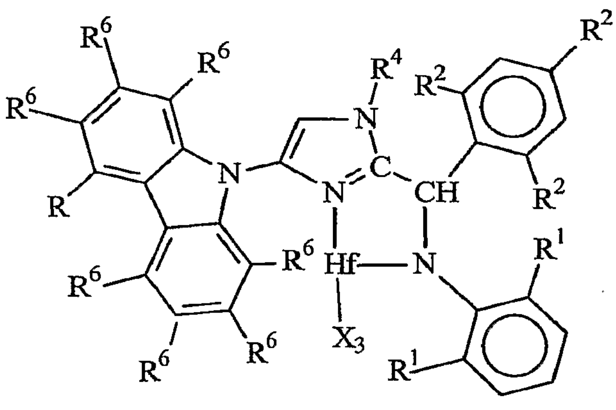

,

wherein,

$R^1$ independently each occurrence is isopropyl;
$R^2$ independently each occurrence is a $C_{1-12}$ alkyl group, preferably $C_{1-4}$ alkyl, most preferably ethyl or isopropyl;

$R^4$ is $C_{1-4}$ alkyl;
$R^6$ is $C_{1-6}$ alkyl or cycloalkyl; and
X independently each occurrence is methyl, benzyl, n-butyl or n-octyl.

The metal complexes are prepared by applying well known organometallic synthetic procedures. The compounds having improved methylcylcohexane solubility, especially those containing $C_{4-20}$ n-alkyl ligands, are readily prepared using an aliphatic or cycloaliphatic hydrocarbon diluent to extract the metal complex after the final alkylation step. This aids in recovery of highly pure complexes, free of magnesium salt by-products resulting from the Grignard alkylating agent. That is, the process may involve the combination of $HfCl_4$ with a lithiated derivative of the heterocyclic ligand followed by alkylation using an alkyl magnesium bromide or chloride and recovery of the alkylation product. Alternate anionic, dianionic or neutral diene ligands may be substituted for some or all of the X groups, if desired, using known substitution techniques.

The metal complexes are normally recovered in the form of the tri-substituted metal compound and separated from reaction by-products. Thereafter, ortho-metallation involving an adjacent carbon of the "T" group, especially the C4 carbon of a dibenzopyrroyl ligand or substituted derivative thereof, may be performed, resulting in loss of one of the three originally formed "X" ligands. While the ortho-metallation may occur upon standing at ambient temperature, it is expedited by use of elevated temperatures. Alternatively, the orthometallation step may be conducted prior to recovery of the metal complexes as a part of the initial synthesis. Loss of one X ligand and formation of the internal bond may result in desirable properties, particularly increased catalyst efficiency and productivity. The ortho-metallation step simultaneously generates a neutral hydrocarbon such as methane or toluene, due to combination with an available hydrogen atom. The removal of this by-product from the reaction mixture generally results in expedited formation of the ortho-metallated product.

The polymers of the invention that are formed from $C_3$ or higher $\alpha$-olefins may have substantially isotactic polymer sequences. "Substantially isotactic polymer sequences" and similar terms mean that the sequences have an isotactic triad (mm) measured by $^{13}C$ NMR of greater than 0.85, preferably greater than 0.90, more preferably greater than 0.93 and most preferably greater than 0.95. Measurement of isotactic triads by the foregoing technique is known in the art and previously disclosed in USP 5,504,172, WO 00/01745 and elsewhere.

The previously described metal complexes according to the invention are typically activated in various ways to yield catalyst compounds having a vacant coordination site that will coordinate, insert, and polymerize addition polymerizable monomers, especially olefin(s). For the purposes of this patent specification and appended claims, the term "activator" or "cocatalyst" is defined to be any compound or component or method which can activate any of the catalyst compounds of the invention as described above. Non-limiting examples of suitable activators include Lewis acids, non-coordinating ionic activators, ionizing activators, organometal compounds, and combinations of the foregoing substances that can convert a neutral catalyst compound to a catalytically active species.

It is believed, without desiring to be bound by such belief, that in one embodiment of the invention, catalyst activation may involve formation of a cationic, partially cationic, or zwitterionic species, by means of proton transfer, oxidation, or other suitable activation process. It is to be understood that the present invention is operable and fully enabled regardless of whether or not such an identifiable cationic, partially cationic, or zwitterionic species actually results during the activation process, also interchangeably referred to herein as an "ionization" process or "ionic activation process".

One suitable class of organometal activators or cocatalysts is alumoxanes, also referred to as alkylaluminoxanes. Alumoxanes are well known Lewis acid activators for use with metallocene type catalyst compounds to prepare addition polymerization catalysts. There are a variety of methods for preparing alumoxanes and modified alumoxanes, non-limiting examples of which are described in U.S. Patents 4,665,208, 4,952,540, 5,091,352, 5,206,199, 5,204,419, 4,874,734, 4,924, 018, 4,908,463, 4,968,827, 5,308,815, 5,329,032, 5,248,801, 5,235,081, 5, 157,137, 5,103,031, 5,391,793, 5,391,529, 5,693,838, 5,731,253, 5,731,451 5,744,656; European publications EP-A-561476, EP-A-279586 and EP-A-594218; and PCT publication WO 94/10180. Preferred alumoxanes are tri($C_{3-6}$)alkylaluminum modified methylalumoxane, especially tri(isobutyl)aluminum modified methalumoxane, available commercially as MMAO-3A or tri(n-octyl)aluminum modified methalumoxane, available commercially as MMAO-12, from Akzo Nobel, Inc.

It is within the scope of this invention to use alumoxane(s) or modified alumoxane(s) as an activator or as a tertiary component in the invented process. That is, the compound may be used alone or in combination with other activators, neutral or ionic, such as tri(alkyl)ammonium tetrakis(pentafluorophenyl)borate compounds, trisperfluoroaryl compounds, polyhalogenated heteroborane anions (WO 98/43983), and combinations thereof. When used as a tertiary component, the amount of alumoxane employed is generally less than that necessary to effectively activate the metal complex when employed alone. In this embodiment, it is believed, without wishing to be bound by such belief, that the alumoxane does not contribute significantly to actual catalyst activation. Not withstanding the foregoing, it is to be understood that some participation of the alumoxane in the activation process is not necessarily excluded.

Ionizing cocatalysts may contain an active proton, or some other cation associated with, but not coordinated

to or only loosely coordinated to, an anion of the ionizing compound. Such compounds are described in European publications EP-A-570982, EP-A-520732, EP-A-495375, EP-A-500944, EP-A-277 003 and EP-A-277004, and U.S. Patents: 5,153,157, 5,198,401, 5,066,741, 5,206,197, 5,241,025, 5,384,299 and 5,502,124. Preferred among the foregoing activators are ammonium cation containing salts, especially those containing trihydrocarbyl- substituted ammonium cations containing one or two $C_{10-40}$ alkyl groups, especially methylbis(octadecyl)ammonium- and methylbis(tetradecyl)-ammonium-cations and a non-coordinating anion, especially a tetrakis(perfluoro)arylborate anion, especially tetrakis(pentafluorophenyl)borate. It is further understood that the cation may comprise a mixture of hydrocarbyl groups of differing lengths. For example, the protonated ammonium cation derived from the commercially available long-chain amine comprising a mixture of two $C_{14}$, $C_{16}$ or $C_{18}$ alkyl groups and one methyl group. Such amines are available from Chemtura Corp., under the trade name Kemamine™ T9701, and from Akzo-Nobel under the trade name Armeen™ M2HT. A most preferred ammonium salt activator is methyldi-($C_{14-20}$alkyl)ammonium tetrakis(pentafluorophenyl)borate.

Activation methods using ionizing ionic compounds not containing an active proton but capable of forming active catalyst compositions, such as ferrocenium salts of the foregoing non-coordinating anions are also contemplated for use herein, and are described in EP-A-426637, EP-A-573403 and U.S. Patent 5,387,568.

A class of cocatalysts comprising non-coordinating anions generically referred to as expanded anions, further disclosed in U. S. Patent 6,395,671, may be suitably employed to activate the metal complexes of the present invention for olefin polymerization. Generally, these cocatalysts (illustrated by those having imidazolide, substituted imidazolide, imidazolinide, substituted imidazolinide, benzimidazolide, or substituted benzimidazolide anions) may be depicted as follows:

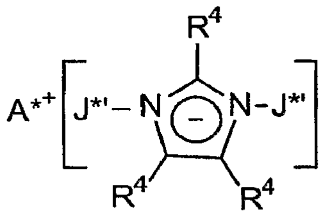, 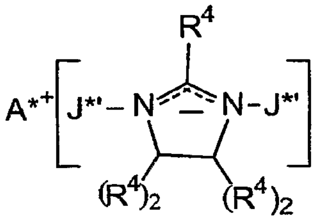 or 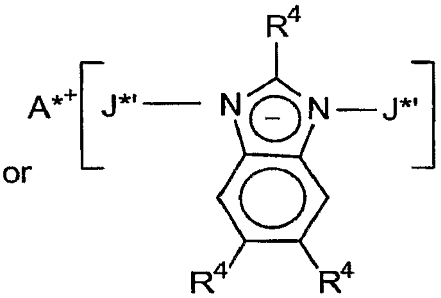,

wherein:

$A^{*+}$ is a cation, especially a proton containing cation, and preferably is a trihydrocarbyl ammonium cation containing one or two $C_{10-40}$ alkyl groups, especially a methyldi($C_{14-20}$alkyl)ammonium- cation,
$R^4$, independently each occurrence, is hydrogen or a halo, hydrocarbyl, halocarbyl, halohydrocarbyl, silylhydrocarbyl, or silyl, (including mono-, di- and tri(hydrocarbyl)silyl) group of up to 30 atoms not counting hydrogen, preferably $C_{1-20}$ alkyl, and
$J^{*'}$ is tris(pentafluorophenyl)borane or tris(pentafluorophenyl)alumane).

Examples of these catalyst activators include trihydrocarbylammonium- salts, especially, methyldi($C_{14-20}$alkyl)ammonium- salts of:

bis(tris(pentafluorophenyl)borane)imidazolide,
bis(tris(pentafluorophenyl)borane)-2-undecylimidazolide,
bis(tris(pentafluorophenyl)borane)-2-heptadecylimidazolide,
bis(tris(pentafluorophenyl)borane)-4,5-bis(undecyl)imidazolide,
bis(tris(pentafluorophenyl)borane)-4,5-bis(heptadecyl)imidazolide,
bis(tris(pentafluorophenyl)borane)imidazolinide,
bis(tris(pentafluorophenyl)borane)-2-undecylimidazolinide,
bis(tris(pentafluorophenyl)borane)-2-heptadecylimidazolinide,
bis(tris(pentafluorophenyl)borane)-4,5-bis(undecyl)imidazolinide,
bis(tris(pentafluorophenyl)borane)-4,5-bis(heptadecyl)imidazolinide,
bis(tris(pentafluorophenyl)borane)-5,6-dimethylbenzimidazolide,
bis(tris(pentafluorophenyl)borane)-5,6-bis(undecyl)benzimidazolide,
bis(tris(pentafluorophenyl)alumane)imidazolide,
bis(tris(pentafluorophenyl)alumane)-2-undecylimidazolide,
bis(tris(pentafluorophenyl)alumane)-2-heptadecylimidazolide,

bis(tris(pentafluorophenyl)alumane)-4,5-bis(undecyl)imidazolide,
bis(tris(pentafluorophenyl)alumane)-4,5-bis(heptadecyl)imidazolide,
bis(tris(pentafluorophenyl)alumane)imidazolinide,
bis(tris(pentafluorophenyl)alumane)-2-undecylimidazolinide,
bis(tris(pentafluorophenyl)alumane)-2-heptadecylimidazolinide,
bis(tris(pentafluorophenyl)alumane)-4,5-bis(undecyl)imidazolinide,
bis(tris(pentafluorophenyl)alumane)-4,5-bis(heptadecyl)imidazolinide,
bis(tris(pentafluorophenyl)alumane)-5,6-dimethylbenzimidazolide, and
bis(tris(pentafluorophenyl)alumane)-5,6-bis(undecyl)benzimidazolide.

Other activators include those described in PCT publication WO 98/07515 such as tris (2, 2', 2"-nonafluorobiphenyl) fluoroaluminate. Combinations of activators are also contemplated by the invention, for example, alumoxanes and ionizing activators in combinations, see for example, EP-A-0 573120, PCT publications WO 94/07928 and WO 95/14044 and US Patents 5,153,157 and 5,453,410. WO 98/09996 describes activating catalyst compounds with perchlorates, periodates and iodates, including their hydrates. WO 99/18135 describes the use of organoboroaluminum activators. EP-A-781299 describes using a silylium salt in combination with a non-coordinating compatible anion. Other activators or methods for activating a catalyst compound are described in for example, U. S. Patents 5,849,852, 5,859, 653, 5,869,723, EP-A-615981, and PCT publication WO 98/32775.

It is also within the scope of this invention that the above described metal complexes can be combined with more than one of the activators or activation methods described above. The mole ratio of the activator component(s) to the metal complex in the catalyst compositions of the invention suitably is in the range of between 0.3:1 to 2000:1, preferably 1:1 to 800:1, and most preferably 1:1 to 500:1. Where the activator is an ionizing activator such as those based on the anion tetrakis(pentafluorophenyl)boron or the strong Lewis acid trispentafluorophenylboron, the mole ratio of the metal or metalloid of the activator component to the metal complex is preferably in the range of between 0.3:1 to 3:1.

Tertiary Components

In addition to the metal complex and cocatalyst or activator, it is contemplated that certain tertiary components or mixtures thereof may be added to the catalyst composition or the reaction mixture in order to obtain improved catalyst performance or other benefit. Examples of such tertiary components include scavengers designed to react with contaminants in the reaction mixture to prevent catalyst deactivation. Suitable tertiary components may also activate or assist in activation of one or more of the metal complexes employed in the catalyst composition or act as chain transfer agents.

Examples include Lewis acids, such as trialkylaluminum compounds, dialkylzinc compounds, dialkylaluminumalkoxides, dialkylaluminumaryloxides, dialkylaluminum N,N-dialkylamides, di(trialkylsilyl)aluminum N,N-dialkylamides, dialkylaluminum N,N-di(trialkylsilyl)amides, alkylaluminumdialkoxides, alkylaluminum di(N,N-dialkylamides), tri(alkyl)silylaluminum N,N-dialkylamides, alkylaluminum N,N-di(trialkylsilyl)amides, alkylaluminum diaryloxides, alkylaluminum $\mu$-bridged bis(amides) such as bis(ethylaluminum)-1-phenylene-2-(phenyl)amido $\mu$-bis(diphenylamide), and/or alumoxanes; as well as Lewis bases, such as organic ether, polyether, amine, and polyamine compounds. Many of the foregoing compounds and their use in polymerizations are disclosed in U. S. Patents 5, 712,352 and 5,763,543, and in WO 96/08520. Preferred examples of the foregoing tertiary components include trialkylaluminum compounds, dialkylaluminum aryloxides, alkylaluminum diaryloxides, dialkylaluminum amides, alkylaluminum diamides, dialkylaluminum tri(hydrocarbylsilyl)amides, alkylaluminum bis(tri(hydrocarbylsilyl)amides), alumoxanes, and modified alumoxanes. Highly preferred tertiary components are alumoxanes, modified alumoxanes, or compounds corresponding to the formula $R^e_2Al(OR^f)$ or $R^e_2Al(NR^g_2)$ wherein $R^e$ is $C_{1-20}$ alkyl, $R^f$ independently each occurrence is $C_{6-20}$ aryl, preferably phenyl or 2,6-di-t-butyl-4-methylphenyl, and $R^g$ is $C_{1-4}$ alkyl or tri($C_{1-4}$alkyl)silyl, preferably trimethylsilyl. Most highly preferred tertiary components include methylalumoxane, tri(isobutylaluminum)- modified methylalumoxane, di(n-octyl)aluminum 2,6-di-t-butyl-4-methylphenoxide, and di(2-methylpropyl)aluminum N,N-bis(trimethylsilyl)amide.

Another example of a suitable tertiary component is a hydroxycarboxylate metal salt, by which is meant any hydroxy-substituted, mono-, di- or tri-carboxylic acid salt wherein the metal portion is a cationic derivative of a metal from Groups 1-13 of the Periodic Table of Elements. This compound may be used to improve polymer morphology especially in a gas phase polymerization. Non- limiting examples include saturated, unsaturated, aliphatic, aromatic or saturated cyclic, substituted carboxylic acid salts where the carboxylate ligand has from one to three hydroxy substituents and from 1 to 24 carbon atoms. Examples include hydroxyacetate, hydroxypropionate, hydroxybutyrate, hydroxyvalerate, hydroxypivalate, hydroxycaproate, hydroxycaprylate, hydroxyheptanate, hydroxypelargonate, hydroxyundecanoate, hydroxyoleate, hydroxyoctoate, hydroxyalmitate, hydroxymyristate, hydroxymargarate, hydroxystearate, hydroxyarachate and hydroxytercosanoate. Non- limiting examples of the metal portion includes a metal selected from the group consisting of Al, Mg, Ca, Sr, Sn, Ti, V, Ba, Zn, Cd, Hg, Mn, Fe, Co, Ni, Pd, Li and Na. Preferred metal salts are zinc salts.

In one embodiment, the hydroxycarboxylate metal salt is represented by the following general formula:

$$M(Q)_x(OOCR)_y,$$

where

M is a metal from Groups 1 to 16 and the Lanthanide and Actinide series, preferably from Groups 1 to 7 and 12 to 16, more preferably from Groups 3 to 7 and 12 to 14, even more preferably Group 12, and most preferably Zn;
Q is halogen, hydrogen, hydroxide, or an alkyl, alkoxy, aryloxy, siloxy, silane, sulfonate or siloxane group of up to 20 atoms not counting hydrogen;
R is a hydrocarbyl radical having from 1 to 50 carbon atoms, preferably 1 to 20 carbon atoms, and optionally substituted with one or more hydroxy, alkoxy, N,N-dihydrocarbylamino, or halo groups, with the proviso that in one occurrence R is substituted with a hydroxy- or N,N-dihydrocarbylamino- group, preferably a hydroxy- group that is coordinated to the metal, M by means of unshared electrons thereof;
x is an integer from 0 to 3;
y is an integer from 1 to 4.

In a preferred embodiment M is Zn, x is 0 and y is 2.

Preferred examples of the foregoing hydroxycarboxylate metal salts include compounds of the formulas:

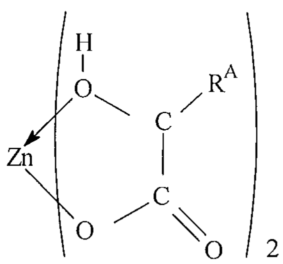

or

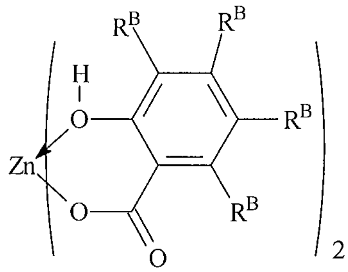

wherein $R^A$ and $R^B$ independently each occurrence are hydrogen, halogen, or $C_{1-6}$ alkyl.

Other additives may be incorporated into the catalyst compositions or employed simultaneously in the polymerization reaction for one or more beneficial purposes. Examples of additives that are known in the art include metal salts of fatty acids, such as aluminum, zinc, calcium, titanium or magnesium mono, di- and tri- stearates, octoates, oleates and cyclohexylbutyrates. Examples of such additives include Aluminum Stearate #18, Aluminum Stearate #22, Aluminum Stearate #132 and Aluminum Stearate EA Food Grade, all of which are available from Chemtura Corp. The use of such additives in a catalyst composition is disclosed in U. S. Patent 6,306,984.

Additional suitable additives include antistatic agents such as fatty amines, for example, AS 990 ethoxylated stearyl amine, AS 990/2 zinc additive, a blend of ethoxylated stearyl amine and zinc stearate, or AS 990/3, a blend of ethoxylated stearyl amine, zinc stearate, and octadecyl-3,5-di-tert-butyl-4-hydroxyhydrocinnamate, also available from Chemtura Corp.

The above described catalyst compounds and catalyst compositions may be combined with one or more support materials or carriers using one of the support methods well known in the art or as described below. Such supported catalysts are particularly useful for slurry or gas phase polymerizations. Either the catalyst composition or the individual components thereof may be in a supported form, for example deposited on, contacted with, or incorporated within a support or carrier.

The terms "support" or "carrier" are used interchangeably and are a porous support material, for example, particulated inorganic oxides, sulfides, carbides and nitrides.

The preferred carriers are inorganic oxides that include those Group 13 or 14 metal oxides. The preferred supports include silica, alumina, silica-alumina, silicon carbide, boron nitride, and mixtures thereof. Also, combinations of these support materials may be used.

It is preferred that the carrier has a surface area in the range of from 10 to 700 $m^2/g$, pore volume in the range of from 0.1 to 4.0 cc/g and average particle size in the range of from 10 to 500 μm. More preferably, the surface area of the carrier is in the range of from 50 to 500 $m^2/g$, pore volume of from 0.5 to 3.5 cc/g, and average particle size of from 20 to 200 μm. Most preferably the surface area of the carrier is in the range of from 100 to 400 $m^2/g$, pore volume from 0.8 to 3.0 cc/g and average particle size is from 20 to 100 μm. The average pore size of a carrier of the invention is typically in the range of from 1 to 100 nm, preferably 5 to 50 nm, and most preferably 7.5 to 35 nm.

Examples of supported catalyst compositions are described in U. S. Patents: 4,701,432, 4,808, 561, 4,912,075, 4,925,821, 4,937,217, 5,008,228, 5,238,892, 5,240,894, 5,332,706, 5,346,925, 5,422,325, 5,466,649, 5,466,766,

5,468,702, 5,529,965, 5,554,704, 5,629,253, 5,639,835, 5,625,015, 5,643,847, 5,665,665, 5,698, 487, 5,714,424, 5,723,400, 5,723,402, 5,731,261, 5,759,940, 5,767,032 and 5,770,664; and PCT publications WO 95/32995, WO 95/14044, WO 96/06187 and WO 97/02297.

Examples of techniques for supporting conventional-type catalyst compositions that may also be employed in the present invention are described in U. S. Patents 4,894,424, 4,376,062, 4,395,359, 4,379,759, 4,405,495 4,540758 and 5,096,869. It is contemplated that the catalyst compounds of the invention may be deposited on the same support together with an activator, or that the activator may be used in an unsupported form, or deposited on a support different from the supported catalyst compounds of the invention, or any combination thereof. A highly preferred support is silica treated with an alumoxane, especially methylalumoxane, so as to form a physical admixture of the two compounds.

There are various other methods in the art for supporting a polymerization catalyst compound or catalyst compositions suitable for use in the present invention. For example, the catalyst compound of the invention may contain a polymer bound ligand as described in USP 5,473,202 and USP 5,770,755. The support used with the catalyst composition of the invention may be functionalized as described in European publication EP-A-802 203. At least one substituent or leaving group of the catalyst may be selected as described in USP 5,688,880. The supported catalyst composition may include a surface modifier as described in WO 96/11960.

A preferred method for producing a supported catalyst composition according to the invention is described in PCT publications WO 96/00245 and WO 96/00243. In this preferred method, the catalyst compound and activators are combined in separate liquids. The liquids may be any compatible solvent or other liquid capable of forming a solution or slurry with the catalyst compounds and/or activator. In the most preferred embodiment the liquids are the same linear or cyclic aliphatic or aromatic hydrocarbon, most preferably hexane or toluene. The catalyst compound and activator mixtures or solutions are mixed together and optionally added to a porous support or, alternatively, the porous support is added to the respective mixtures. The resulting supported composition may be dried to remove diluent, if desired, or utilized separately or in combination in a polymerization. Highly desirably the total volume of the catalyst compound solution and the activator solution or the mixtures thereof is less than five times the pore volume of the porous support, more preferably less than four times, even more preferably less than three times; with most prefer ranges being from 1.1 times to 3.5 times the pore volume of the support.

The catalyst composition of the present invention may also be spray dried using techniques as described in USP 5,648,310, to produce a porous, particulate solid, optionally containing structural reinforcing agents, such as certain silica or alumina compounds, especially fumed silica. In these compositions the silica acts as a thixotropic agent for droplet formation and sizing as well as a reinforcing agent in the resulting spray-dried particles.

Procedures for measuring the total pore volume of a porous material are well known in the art. The preferred procedure is BET nitrogen absorption. Another suitable method well known in the art is described in Innes, Total Porosity and Particle Density of Fluid Catalysts By Liquid Titration, Analytical Chemistry, (1956) 28, 332-334.

It is further contemplated by the invention that other catalysts can be combined with the catalyst compounds of the invention. Examples of such other catalysts are disclosed in U.S. Patents 4,937,299, 4,935,474, 5,281,679, 5,359,015, 5,470,811, 5,719,241, 4,159,965, 4,325,837, 4,701,432, 5,124,418, 5,077,255, 5,183,867, 5,391,660, 5,395,810, 5,691,264, 5,723, 399 and 5,767,031; and PCT Publication WO 96/23010. In particular, the compounds that may be combined with the metal complexes of the invention to produce mixtures of polymers in one embodiment of the invention include conventional Ziegler-Natta transition metal compounds as well as coordination complexes, including transition metal complexes.

Conventional Ziegler-Natta transition metal compounds include the well known magnesium dichloride supported compounds, vanadium compounds, and chromium catalysts (also known as "Phillips type catalysts"). Examples of these catalysts are discussed in U.S. Patents 4,115,639, 4,077,904 4,482,687, 4,564,605, 4,721,763, 4,879,359 and 4,960,741. Suitable transition metal complexes that may be used in the present invention include transition metal compounds from Groups 3 to 8, preferably Group 4 of the Periodic Table of Elements containing inert ligand groups and capable of activation by contact with a cocatalyst.

Suitable Ziegler-Natta catalyst compounds include alkoxy, phenoxy, bromide, chloride and fluoride derivatives of the foregoing metals, especially titanium. Preferred titanium compounds include $TiCl_4$, $TiBr_4$, $Ti(OC_2H_5)_3Cl$, $Ti(OC_2H_5)Cl_3$, $Ti(OC_4H_9)_3Cl$, $Ti(OC_3H_7)_2Cl_2$, $Ti(OC_2H_5)_2Br_2$, $TiCl_3$•1/3$AlCl_3$ and $Ti(OC_{12}H_{25})Cl_3$, and mixtures thereof, preferably supported on an inert support, usually $MgCl_2$. Other examples are described in, U.S. Pat. Nos. 4,302,565, 4,302,566, and 6,124,507, for example.

Non-limiting examples of vanadium catalyst compounds include vanadyl trihalide, alkoxy halides and alkoxides such as $VOCl_3$, $VOCl_2(OBu)$ where Bu is butyl and $VO(OC_2H_5)_3$; vanadium tetra-halide and vanadium alkoxy halides such as $VCl_4$ and $VCl_3(OBu)$; vanadium and vanadyl acetyl acetonates and chloroacetyl acetonates such as $V(AcAc)_3$ and $VOCl_2(AcAc)$ where (AcAc) is an acetyl acetonate.

Conventional-type chromium catalyst compounds suitable for use in the present invention include $CrO_3$, chromocene, silyl chromate, chromyl chloride ($CrO_2Cl_2$), chromium-2-ethyl-hexanoate, and chromium acetylacetonate ($Cr(AcAc)_3$). Non-limiting examples are disclosed in U.S. Pat. Nos: 2,285,721, 3,242,099 and 3,231,550.

Still other conventional-type transition metal catalyst compounds suitable for use in the present invention are disclosed in U.S. Pat. Nos. 4,124,532, 4,302,565,4,302,566 and 5,763,723 and EP-A-416815 and EP-A-420436.

Cocatalyst compounds for use with the above conventional-type catalyst compounds are typically organometallic derivatives of metals of Groups 1, 2, 12 or 13. Non-limiting examples include methyllithium, butyllithium, dihexylmercury, butylmagnesium, diethylcadmium, benzylpotassium, diethylzinc, tri-n-butylaluminum, diisobutyl ethylboron, diethylcadmium, di-n-butylzinc and tri-n-amylboron, and, in particular, aluminum trialkyl compounds, such as tri-hexylaluminum, triethylaluminum, trimethylaluminum, and triisobutylaluminum. Other suitable cocatalyst compounds include mono-organohalides and hydrides of Group 13 metals, and mono- or di-organohalides and hydrides of Group 13 metals. Non-limiting examples of such conventional-type cocatalyst compounds include di-isobutylaluminum bromide, isobutylboron dichloride, methyl magnesium chloride, ethylberyllium chloride, ethylcalcium bromide, di-isobutylaluminum hydride, methylcadmium hydride, diethylboron hydride, hexylberyllium hydride, dipropylboron hydride, octylmagnesium hydride, butylzinc hydride, dichloroboron hydride, dibromoaluminum hydride and bromocadmium hydride. Conventional-type organometallic cocatalyst compounds are known to those in the art and a more complete discussion of these compounds may be found in US Patents 3,221,002 and 5,093,415.

Suitable transition metal coordination complexes include metallocene catalyst compounds, which are half and full sandwich compounds having one or more π-bonded ligands including cyclopentadienyl-type structures or other similar functioning structure such as pentadiene, cyclooctatetraendiyl and imides. Typical compounds are generally described as coordination complexes containing one or more ligands capable of π-bonding to a transition metal atom, usually, cyclopentadienyl derived ligands or moieties, in combination with a transition metal selected from Group 3 to 8, preferably 4, 5 or 6 or from the lanthanide and actinide series of the Periodic Table of Elements. Exemplary of metallocene-type catalyst compounds are described in, for example, US Patents: 4,530,914, 4,871,705, 4,937,299, 5,017,714, 5,055,438, 5, 096,867, 5,120,867, 5,124,418, 5,198,401, 5,210,352, 5,229,478, 5,264,405, 5,278,264, 5,278,119, 5,304,614, 5,324,800, 5,347,025, 5,350,723, 5,384, 299, 5,391,790, 5,391,789, 5,399,636, 5,408,017, 5,491,207, 5,455,366, 5, 534,473, 5,539,124, 5,554,775, 5,621,126, 5,684,098, 5,693,730, 5,698,634, 5,710,297, 5,712,354, 5,714,427, 5,714,555, 5,728,641, 5,728,839, 5,753, 577, 5,767,209, 5,770,753 and 5,770,664; European publications: EP-A-0 591 756, EP-A-0 520 732, EP-A-0 420 436, EP-A-0 485 822, EP-A-0 485 823, EP-A-0 743 324, EP-A-0 518 092; and PCT publications: WO 91/04257, WO 92/00333, WO 93/08221, WO 93/08199, WO 94/01471, WO 96/20233, WO 97/15582, WO 97/19959, WO 97/46567, WO 98/01455, WO 98/06759 and WO 98/011144.

Preferred examples of metallocenes used in combination with the metal complexes of the present invention include compounds of the formulas:

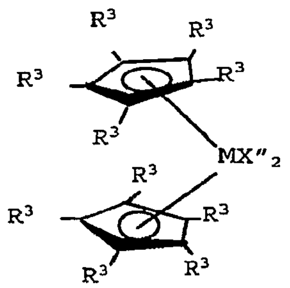

or

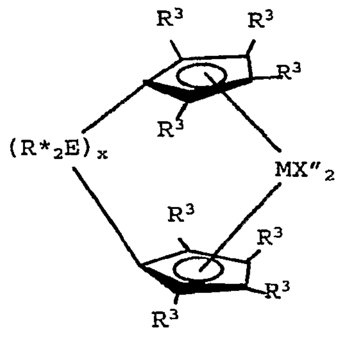

wherein:

M is titanium, zirconium or hafnium, preferably zirconium or hafnium, in the +2 or +4 formal oxidation state;
$R^3$ in each occurrence independently is selected from the group consisting of hydrogen, hydrocarbyl, silyl, germyl, cyano, halo and combinations thereof, said $R^3$ having up to 20 non-hydrogen atoms, or adjacent $R^3$ groups together form a divalent derivative (that is, a hydrocarbadiyl, siladiyl or germadiyl group) thereby forming a fused-ring system,
X" independently each occurrence is an anionic ligand group of up to 40 non-hydrogen atoms, or two X" groups together form a divalent anionic ligand group of up to 40 non-hydrogen atoms or together are a conjugated diene having from 4 to 30 non-hydrogen atoms forming a π-complex with M, whereupon M is in the +2 formal oxidation state,
R* independently each occurrence is $C_{1-4}$ alkyl or phenyl,
E independently each occurrence is carbon or silicon, and
x is an integer from 1 to 8.

Additional examples of coordination complexes used in combination with the metal complexes of the present invention are those of the formula:

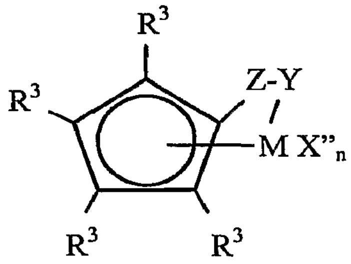

, wherein:

M is titanium, zirconium or hafnium in the +2, +3 or +4 formal oxidation state;
$R^3$ in each occurrence independently is selected from the group consisting of hydrogen, hydrocarbyl, silyl, germyl, cyano, halo and combinations thereof, said $R^3$ having up to 20 non-hydrogen atoms, or adjacent $R^3$ groups together form a divalent derivative (that is, a hydrocarbadiyl, siladiyl or germadiyl group) thereby forming a fused-ring system,
each X" is a halo, hydrocarbyl, hydrocarbyloxy, hydrocarbylamino, or silyl group, said group having up to 20 non-hydrogen atoms, or two X" groups together form a neutral $C_{5-30}$ conjugated diene or a divalent derivative thereof;
Y is -O-, -S-, -NR*-, -PR*-;
Z is $SiR^*_2$, $CR^*_2$, $SiR^*_2SiR^*_2$, $CR^*_2CR^*_2$, CR*=CR*, $CR^*_2SiR^*_2$, or $GeR^*_2$, wherein R* is as previously defined, and
n is an integer from 1 to 3.

The foregoing types of coordination complexes are described in, for example, U. S. Patents 5,703,187, 5,965,756, 6,150,297, 5, 064,802, 5,145,819, 5,149,819, 5,243,001, 5,239,022, 5,276,208, 5,296,434, 5,321,106, 5,329,031, 5,304,614, 5,677,401 and 5,723,398, PCT publications WO 93/08221, WO 93/08199, WO 95/07140, WO 98/11144, WO02/02577, WO 02/38628; and European publications EP-A-578838, EP-A-638595, EP-A-513380 and EP-A-816372.

Additional suitable metal coordination complexes used in combination with the metal complexes of the present invention are complexes of a transition metal, a substituted or unsubstituted π-bonded ligand, and one or more heteroallyl moieties, such as those described in U.S. Patents 5,527,752 and 5,747,406, and EP-A-735,057. Preferably, these catalyst compounds are represented by one of the following formulas:

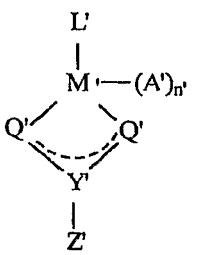

or

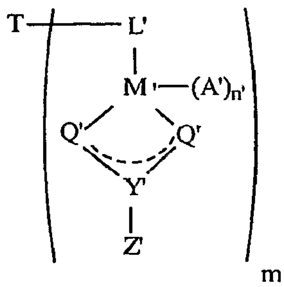

wherein M' is a metal from Groups 4, 5 or 6 or the Periodic Table of the Elements, preferably titanium, zirconium or hafnium, most preferably zirconium or hafnium;
L' is a substituted or unsubstituted, π-bonded ligand coordinated to M' and, when T is present, bonded to T, preferably L' is a cycloalkadienyl ligand, optionally with one or more hydrocarbyl substituent groups having from 1 to 20 carbon atoms, or fused-ring derivatives thereof, for example, a cyclopentadienyl, indenyl or fluorenyl ligand;
each Q' is independently selected from the group consisting of -O-, -NR'-, $-CR'_2-$ and -S-, preferably oxygen;
Y' is either C or S, preferably carbon;
Z' is selected from the group consisting of-OR', $-NR'_2$, $-CR'_3$, -SR', $-SiR'_3$, $-PR'_2$,-H, and substituted or unsubstituted aryl groups, with the proviso that when Q is -NR'- then Z is selected from the group consisting of: -OR', $-NR'_2$, -SR', $-SiR'_3$, $-PR'_2$ and -H, preferably Z is selected from the group consisting of -OR', $-CR'_3$ and - $NR'_2$;
n' is 1 or 2, preferably 1;
A' is a univalent anionic group when n is 2 or A' is a divalent anionic group when n is 1, preferably A' is a carbamate, hydroxycarboxylate, or other heteroallyl moiety described by the Q', Y' and Z' combination;
each R' is independently a group containing carbon, silicon, nitrogen, oxygen, and/or phosphorus and one or more R' groups may be also attached to the L' substituent, preferably R' is a hydrocarbon group containing from 1 to 20

carbon atoms, most preferably an alkyl, cycloalkyl, or an aryl group;

T is a bridging group selected from the group consisting of alkylene and arylene groups containing from 1 to 10 carbon atoms optionally substituted with carbon or heteroatom(s), germanium, silicon and alkyl phosphine; and

m is 2 to 7, preferably 2 to 6, most preferably 2 or 3.

In the foregoing formulas, the supportive substituent formed by Q', Y' and Z' is a uncharged polydentate ligand exerting electronic effects due to its high polarizability, similar to the cyclopentadienyl ligand. In the most referred embodiments of this invention, the disubstituted carbamates and the hydroxycarboxylates are employed. Non-limiting examples of these catalyst compounds include indenyl zirconium tris(diethylcarbamate), indenyl zirconium tris(trimethylacetate), indenyl zirconium tris(p-toluate), indenyl zirconium tris(benzoate), (1-methylindenyl)zirconium tris(trimethylacetate), (2-methylindenyl) zirconium tris(diethylcarbarnate), (methylcyclopentadienyl)zirconium tris(trimethylacetate), cyclopentadienyl tris(trimethylacetate), tetrahydroindenyl zirconium tris(trimethylacetate), and (pentamethyl- cyclopentadienyl)zirconium tris(benzoate). Preferred examples are indenyl zirconium tris(diethylcarbamate), indenylzirconium tris(trimethylacetate), and (methylcyclopentadienyl)zirconium tris(trimethylacetate).

In another embodiment of the invention the additional catalyst compounds are those nitrogen containing heterocyclic ligand complexes, based on bidentate ligands containing pyridine or quinoline moieties, such as those described in WO 96/33202, WO 99/01481, WO 98/42664 and U. S. Patent 5,637,660.

It is within the scope of this invention, in one embodiment, that catalyst compound complexes of $Ni^{2+}$ and $Pd^{2+}$ described in the articles Johnson, et al., "New Pd(II)- and Ni(II)-Based Catalysts for Polymerization of Ethylene and a-Olefins", J.A.C.S. (1995) 117, 6414-6415 and Johnson, et al., "Copolymerization of Ethylene and Propylene with Functionalized Vinyl Monomers by Palladium(II) Catalysts", J.A.C.S., (1996) 118, 267-268, and WO 96/23010, may be combined with the present metal complexes for use in the process of the invention. These complexes can be either dialkyl ether adducts, or alkylated reaction products of the described dihalide complexes that can be activated to a cationic state by the conventional-type cocatalysts or the activators of this invention described below.

Additional suitable catalyst compounds for use in the foregoing mixed catalyst compositions are diimine based ligands containing Group 8 to 10 metal compounds disclosed in PCT publications WO 96/23010 and WO 97/48735 and Gibson, et al., Chem. Comm., (1998) 849-850.

Other catalysts are those Group 5 and 6 metal imido complexes described in EP-A-0 816 384 and U. S. Patent 5,851,945. In addition, catalysts include bridged bis(arylamido) Group 4 compounds described by D. H. McConville, et al., Organometallics (1995) 14, 5478-5480. Other catalysts are described as bis(hydroxy aromatic nitrogen ligands) in U. S. Patent 5,852,146. Other metallocene-type catalysts containing one or more Group 15 atoms include those described in WO 98/46651. Still another metallocene-type catalysts include those multinuclear catalysts as described in WO 99/20665.

It is contemplated in some embodiments, that the catalyst compounds employed in addition to those of the invention described above may be asymmetrically substituted in terms of additional substituents or types of substituents, and/or unbalanced in terms of the number of additional substituents on the $\pi$-bonded ligand groups. It is also contemplated that such additional catalysts may include their structural or optical or enantiomeric isomers (meso and racemic isomers) and mixtures thereof, or they may be chiral and/or a bridged catalyst compounds.

In one embodiment of the invention, one or more olefins, preferably one or more $C_{2-30}$ olefins, preferably ethylene and/or propylene are prepolymerized in the presence of the catalyst composition prior to the main polymerization. The prepolymerization can be carried out batchwise or continuously in gas, solution or slurry phase including at elevated pressures. The prepolymerization can take place with any olefin monomer or combination and/or in the presence of any molecular weight controlling agent such as hydrogen. For examples of prepolymerization procedures, see U. S. Patents 4,748,221, 4,789,359, 4,923,833, 4,921,825, 5,283,278 and 5,705,578, European publication EP-A-279863, and PCT Publication WO 97/44371. A prepolymerized catalyst composition for purposes of this patent specification and appended claims preferably is a supported catalyst system.

The method for making the catalyst composition generally involves the combining, contacting, blending, and/or mixing of the respective catalyst components, optionally in the presence of the monomer or monomers to be polymerized. Ideally, the contacting is conducted under inert conditions or under polymerization conditions at a temperature in the range of from 0 to 200 °C, more preferably from 15 to 190 °C, and preferably at pressures from ambient (600 kPa) to 1000 psig (7 MPa). The contacting is desirably performed under an inert gaseous atmosphere, such as nitrogen, however, it is also contemplated that the combination may be performed in the presence of olefin(s), solvents, and hydrogen.

Mixing techniques and equipment contemplated for use in the method of the invention are well known. Mixing techniques may involve any mechanical mixing means, for example shaking, stirring, tumbling, and rolling. Another technique contemplated involves the use of fluidization, for example in a fluid bed reactor vessel where circulated gases provide the mixing.

For supported catalyst compositions, the catalyst composition is substantially dried and/or free flowing. In a preferred embodiment, the various components are contacted in a rotary mixer, tumble mixer, or in a fluidized bed mixing

process, under a nitrogen atmosphere, and any liquid diluent is subsequently removed.

Suitable addition polymerization processes wherein the present catalyst compositions may be employed include solution, gas phase, slurry phase, high pressure, or combinations thereof. Particularly preferred is a solution or slurry polymerization of one or more olefins at least one of which is ethylene, 4-methyl-1-pentene, or propylene. The invention is particularly well suited to processes wherein propylene, 1-butene, or 4-methyl-1-pentene is homopolymerized, ethylene and propylene are copolymerized, or ethylene, propylene, or a mixture thereof is copolymerized with one or more monomers selected from the group consisting of 1-octene, 4-methyl-1-pentene, butadiene, norbornene, ethylidene norbornene, 1,4-hexadiene, 1,5-hexadiene, norbornadiene, and 1-butene. The homopolymers of butene-1 and 4-methyl-1-pentene and copolymers thereof, especially with ethylene or propylene are desirably highly isotactic.

Other monomers useful in the process of the invention include ethylenically unsaturated monomers, diolefins having 4 to 18 carbon atoms, conjugated or nonconjugated dienes, polyenes, vinyl monomers and cyclic olefins. Non-limiting monomers useful in the invention include norbornene, isobutylene, vinylbenzocyclobutane, styrenes, alkyl substituted styrene, ethylidene norbornene, isoprene, 1-pentene, dicyclopentadiene and cyclopentene.

Typically, in a gas phase polymerization process a continuous cycle is employed where in one part of the cycle of a reactor system, a cycling gas stream, otherwise known as a recycle stream or fluidizing medium, is heated in the reactor by the heat of polymerization. This heat is removed from the recycle composition in another part of the cycle by a cooling system external to the reactor. Generally, in a gas fluidized bed process for producing polymers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and fresh monomer is added to replace the polymerized monomer. Examples of such processes are disclosed in U. S. Patents 4,543,399, 4,588,790, 5,028,670, 5,317,036, 5,352,749, 5,405,922, 5,436,304, 5, 453,471, 5,462,999, 5,616,661 and 5,668,228.

The reactor pressure in a gas phase process may vary from 100 psig (700 kPa) to 500 psig (3500 kPa), preferably in the range of from 200 psig (1400 kPa) to 400 psig (2800 kPa), more preferably in the range of from 250 psig (1700 kPa) to 350 psig (2400 kPa). The reactor temperature in the gas phase process may vary from 30 to 120 °C, preferably from 60 to 115 °C, more preferably from 70 to 110 °C, and most preferably from 70 to 95 °C.

A slurry polymerization process generally uses pressures in the range of from 100 kPa to 5 MPa, and temperatures in the range of 0 to 120 °C. In a slurry polymerization, a suspension of solid, particulate polymer is formed in a liquid polymerization diluent to which monomers and often hydrogen along with catalyst are added. The diluent is intermittently or continuously removed from the reactor where the volatile components are separated from the polymer and recycled to the reactor. The liquid diluent employed should remain a liquid under the conditions of polymerization and be relatively inert. Preferred diluents are aliphatic or cycloaliphatic hydrocarbons, preferably propane, n-butane, isobutane, pentane, isopentane, hexane, cyclohexane, or a mixture thereof is employed. Examples of suitable slurry polymerization processes for use herein are disclosed in U. S. Patents 3,248,179 and 4,613,484.

Examples of solution processes that are suitably employed with the catalyst compositions of the present invention are described in U. S. Patents 4,271,060, 5,001,205, 5,236,998 and 5,589,555. Highly preferably, the solution process is an ethylene polymerization or an ethylene/propylene copolymerization operated in a continuous or semi-continuous manner with high ethylene conversion, preferably greater than 98 percent, more preferably greater than 99.5 percent ethylene conversion. Typical temperatures for solution polymerizations are from 70 to 200 °C, more preferably from 100 to 150 °C.

Regardless of the process conditions employed (gas phase, slurry or solution phase) in order to achieve the benefits of the present invention, the present polymerization is desirably conducted at a temperature greater than or equal to 100 °C, more preferably greater than or equal to 110 °C, and most preferably greater than or equal to 115 °C.

Polymer properties

The polymers produced by the process of the invention can be used in a wide variety of products and end-use applications. The polymers produced by the process of the invention include high density polyethylenes, low density polyethylene, linear, low density polyethylene (ethylene/ $\alpha$-olefin copolymers), polypropylene, copolymers of propylene and ethylene, and ethylene/propylene/diene terpolymers. Especially preferred polymers are propylene/ethylene-or propylene/ethylene/diene interpolymers containing 65 percent or more, preferably 85 percent or more polymerized propylene and substantially isotactic propylene segments.

The ethylene homopolymers and high ethylene content copolymers formed by the present process preferably have a density in the range of from 0.85 g/cc to 0.97 g/cc, more preferably in the range of from 0.86 g/cc to 0.92 g/cc. Desirably they additionally have melt index ($I_2$) determined according to ASTM D-1238, Condition E, from 1 to 100 dg/min, preferably from 2 to 10 dg/min. Propylene/ethylene copolymers prepared according to the present process desirably have a $\Delta H_f$ (j/g) from 25 to 55, preferably from 29-52. Highly desirably polymers prepared according to the present invention are propylene/ethylene copolymers containing 85 to 95 percent, preferably 87 to 93 percent polymerized

propylene, a density from 0.860 to 0.885, and a melt flow rate (MFR) determined according to ASTM D-1238, Condition L, from 0.1 to 500, preferably 1.0 to 10. Typically, the polymers produced by the process of the invention have a molecular weight distribution or polydispersity index (Mw/Mn or PDI) from 2.0 to 15.0, preferably from 2.0 to 10.0.

"Broad polydispersity", "broad molecular weight distribution", "broad MWD" and similar terms mean a PDI greater than or equal to 3.0, preferably from 3.0 to 8.0. Polymers for use in fiber and extrusion coating applications typically have a relatively broad polydispersity. Catalysts comprising a complex according to the present formula are especially adapted for preparing such propylene/ethylene interpolymers having a broad molecular weight distribution for this end use.

"Narrow polydispersity", "narrow molecular weight distribution", "narrow MWD" and similar terms mean a PDI of less than 3.0, preferably from 2.0 to 2.7. Polymers for use in adhesive applications preferentially have a narrower polydispersity. Catalysts comprising a complex according to the present invention are especially adapted for preparing such narrow molecular weight distribution propylene/ethylene interpolymers for this end use.

A suitable technique for determining molecular weight distribution of the polymers is gel permeation chromatography (GPC) using a Polymer Laboratories PL-GPC-220 high temperature chromatographic unit equipped with four linear mixed bed columns (Polymer Laboratories (20-$\mu$m particle size)). The oven temperature is set at 160 °C with the autosampler hot zone at 160 °C and the warm zone at 145 °C. The solvent is 1,2,4-trichlorobenzene containing 200 ppm 2,6-di-t-butyl-4-methylphenol. The flow rate is 1.0 milliliter/minute and the injection size is 100 microliters. About 0.2 percent solutions of the samples are prepared for injection by dissolving the sample in nitrogen purged 1,2,4-trichlorobenzene containing 200 ppm 2,6-di-t-butyl-4-methylphenol for 2.5 hours at 160 °C with gentle mixing.

The molecular weight is determined by using ten narrow molecular weight distribution polystyrene standards (from Polymer Laboratories, EasiCal PS1 ranging from 580 to 7,500,000 g/mole) in conjunction with their elution volumes. The equivalent polypropylene molecular weights are determined by using appropriate Mark-Houwink coefficients for polypropylene (J. Appl. Polym. Sci., 29, 3763 - 3782 (1984)) and polystyrene (Macromolecules, 4, 507 (1971)) in the Mark-Houwink equation: {N} = KMa,
where $K_{pp} = 1.90 \times 10^{-4}$, $a_{pp} = 0.725$ and $K_{ps} = 1.26 \times 10^{-4}$, $a_{ps} = 0.702$.

One suitable technique for measuring polymer thermal properties is by means of differential scanning calorimetry (DSC). General principles of DSC measurements and applications of DSC to studying crystalline polymers are described in standard texts such as, E. A. Turi, ed., "Thermal Characterization of Polymeric Materials", Academic Press, (1981). A suitable technique for conducting DSC analyses is by using a model Q1000 DSC device from TA Instruments, Inc. To calibrate the instrument, first a baseline is obtained by running the DSC from -90 °C to 290 °C without any sample in the aluminum DSC pan. Then 7 grams of a fresh indium sample is analyzed by heating the sample to 180 °C, cooling the sample to 140 °C at a cooling rate of 10 °C/min followed by keeping the sample isothermally at 140 °C for 1 minute, followed by heating the sample from 140 °C to 180 °C at a heating rate of 10 °C/min. The heat of fusion and the onset of melting of the indium sample are determined and checked to be within 0.5 °C from 156.6 °C for the onset of melting and within 0.5 J/g from 28.71 J/g for the heat of fusion. Then deionized water is analyzed by cooling a small drop of fresh sample in the DSC pan from 25 °C to -30 °C at a cooling rate of 10 °C/min. The sample is retained at -30 °C for 2 minutes and heated to 30 °C at a heating rate of 10 °C/min. The onset of melting is determined and checked to be within 0.5 °C from 0 °C.

The samples are prepared by pressing the polymer into a thin film at a temperature of 190 °C. About 5 to 8 mg of film sample is weighed and placed in the DSC pan. The lid is crimped on the pan to ensure a closed atmosphere. The sample pan is placed in the DSC cell and then heated at a rate of about 100 °C/min to a temperature of about 30 °C above the melt temperature. The sample is kept at this temperature for about 3 minutes then cooled at a rate of 10 °C/min to -40 °C, and held at that temperature for 3 minutes. Next the sample is again heated at a rate of 10 °C/min until melting is complete. The resulting enthalpy curves are analyzed for peak melt temperature, onset and peak crystallization temperatures, heat of fusion, and heat of crystallization.

The present interpolymers of propylene with ethylene and optionally $C_{4-20}$ $\alpha$-olefins have a relatively broad melting point as evidenced by the DSC heating curve. It is believed that this may be due to the unique distribution of ethylene polymer sequences within the polymer chains. As a consequence of the foregoing fact, melting point data, Tm, are not generally reported herein or utilized in describing polymer properties. Crystallinity is determined based on $\Delta H_f$ measurements, with percent crystallinity determined by the formula: $\Delta H_f$/165(j/g) x 100. Generally, a relatively narrow melting peak is observed for propylene/ethylene interpolymers prepared using a metallocene catalyst whereas the polymers according to the present invention possess a relatively broad melting point curve. Polymers having a broadened melting point have been found to be highly useful in applications requiring a combination of elasticity and high temperature performance, such as elastomeric fibers or adhesives, for example.

One characteristic in the DSC curve of propylene/ethylene polymers possessing a relatively broad melting point is that the $T_{me}$, the temperature at which the melting ends, remains essentially the same and $T_{max,}$ the peak melting temperature, decreases as the amount of ethylene in the copolymer is increased. An additional feature of such polymers is that the skewness of the TREF curve is generally greater than -1.60, more preferably greater than-1.00.

The determination of crystallizable sequence length distribution in a copolymer can be measured by the technique of temperature-rising elution fractionation (TREF), as disclosed by L. Wild, et al., Journal of Polymer Science: Polymer. Physics Ed., 20, 441 (1982), Hazlitt, Journal of Applied Polymer Science: Appl. Polym. Symp., 45, 25 (1990), and elsewhere. One version of this technique, analytical temperature-rising elution fractionation (ATREF), is not concerned with the actual isolation of fractions, but with more accurately determining the weight distribution of fractions, and is especially suited for use with small sample sizes.

While TREF and ATREF were originally applied to the analysis of copolymers of ethylene and higher $\alpha$-olefins, they can also be adapted for the analysis of copolymers of propylene with ethylene (or higher $\alpha$-olefins). The analysis of copolymers of propylene may require use of higher temperatures for the dissolution and crystallization of pure, isotactic polypropylene, but most of the copolymerization products of interest elute at similar temperatures as observed for copolymers of ethylene. The following table summarizes the conditions used for the analysis of propylene/ethylene copolymers.

| Parameter | Explanation |
|---|---|
| Column type and size | Stainless steel shot with 1.5 cc interstitial volume |
| Mass detector | Single beam infrared detector at 2920 $cm^{-1}$ |
| Injection temperature | 150 °C |
| Temperature control device | GC oven |
| Solvent | 1,2,4 - trichlorobenzene |
| Concentration | 0.1 to 0.3 percent (weight/weight) |
| Cooling Rate 1 | 140 °C to 120 °C @ -6.0 °C/min. |
| Cooling Rate 2 | 120 °C to 44.5 °C @ -0.1 °C/min. |
| Cooling Rate 3 | 44.5 °C to 20 °C @ -0.3 °C/min. |
| Heating Rate | 20 °C to 140 °C @ 1.8 °C/min. |
| Data acquisition rate | 12 / min. |

The data obtained from TREF or ATREF analysis are expressed as a normalized plot of polymer weight fraction as a function of elution temperature. The separation mechanism is analogous to that of copolymers of ethylene, whereby the molar content of the crystallizable component (ethylene) is the primary factor determining the elution temperature. In the case of copolymers of propylene, the molar content of isotactic propylene units primarily determines the elution temperature.

The TREF or ATREF curve of a metallocene-catalyzed homogeneous propylene/ethylene copolymer is characterized by a gradual tailing at lower elution temperatures compared to the sharpness or steepness of the curve at higher elution temperatures. A statistic that reflects this type of asymmetry is skewness. The skewness index, $S_{ix}$, determined by the following formula, may be employed as a measure of this asymmetry.

$$S_{ix} = \frac{\sqrt[3]{\sum w_i * (T_i - T_{Max})^3}}{\sqrt{\sum w_i * (T_i - T_{Max})^2}}$$

The value, $T_{max}$, is defined as the temperature of the largest weight fraction eluting between 50 and 90 °C in the TREF curve. $T_i$ and $w_i$ are the elution temperature and weight fraction respectively of an arbitrary, $i^{th}$ fraction in the TREF distribution. The distributions are normalized (the sum of the $w_i$ equals 100 percent) with respect to the total area of the curve eluting above 30 °C. Thus, the index reflects only the properties of the crystallized polymer and any influence due to uncrystallized polymer (polymer still in solution at or below 30 °C) is omitted from the calculation.

Certain of the polymers according to the invention having a relatively broad melting point on the DSC curve desirably are characterized by a skewness index greater than -1.6, more preferably greater than -1.2.

Polymer tacticity, propylene content, regio-errors and other properties are determined by standard NMR techniques. Tacticities (mm) or (rr) are calculated based on meso- or regio-triads, and may be expressed as ratios less than one or as percents. Propylene isotacticity at the triad level (mm) is determined from the integrals of the mm triad

(22.70-21.28 ppm), the mr triad (21.28-20.67 ppm) and the rr triad (20.67-19.74). The mm isotacticity is determined by dividing the intensity of the mm triad by the sum of the mm, mr, and rr triads. For ethylene containing interpolymers the mr region is corrected by subtracting the 37.5-39 ppm peak integral. For copolymers with other monomers that produce peaks in the regions of the mm, mw, and rr triads, the integrals for these regions are similarly corrected by subtracting the intensity of the interfering peak using standard NMR techniques, once the peaks have been identified. This can be accomplished, for example, by analysis of a series of copolymers of various levels of monomer incorporation, by literature assignments, by isotopic labeling, or other means which are known in the art.

EXAMPLES

The invention is further illustrated by the following examples that should not be regarded as limiting of the present invention. The skilled artisan will appreciate that the invention disclosed herein may be practiced in the absence of any component which has not been specifically disclosed. The term "overnight", if used, refers to a time of approximately 16-18 hours, the terms "room temperature" and "ambient temperature", refer to temperatures of 20-25 °C, and the term "mixed alkanes" refers to a commercially obtained mixture of $C_{6-9}$ aliphatic hydrocarbons available under the trade designation Isopar E®, from Exxon Mobil Chemicals, Inc. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before their use.

**Example 1 Hafnium, [N-[2,6-bis(1-methylethyl)phenyl]-α-[2,4,6-tri(1-methylethyl)phenyl]-5-(carbazol-1-yl)-2-(N'-methyl)imidazol-2-yl)methanaminato (2-)-κ$N^1$, κ$N^2$]tri(methyl)**

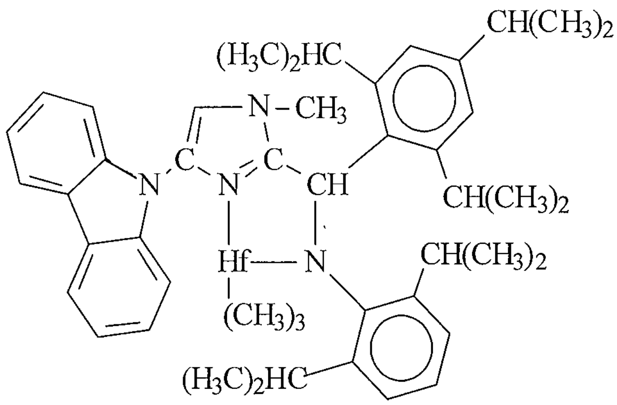

Under an $N_2$ atmosphere, a glass flask is charged with 2.35 mmol of 2-(1)N-methyl imidazolemethanamine-N-[2,6-(diisopropyl)phenyl]-α-[2,4,6-(trisopropyl)phenyl]-4-(N-carbazole) and 60 mL of toluene is added. To this solution is added 2.35 mmol of *n*-BuLi (2.03 M solution in cyclohexane) dropwise by syringe and the solution is stirred at ambient temperature for 2 hours. To this solution is added 2.35 mmol of solid $HfCl_4$ in one portion. The mixture heated gradually to 105°C over 30 minutes, then held at this temperature for 90 minutes. After cooling, 7.2 mmol of MeMgBr (3.1 equivalents, 3.0 M solution in diethyl ether) is added dropwise by syringe and the resulting mixture stirred 30 minutes at ambient temperature. The volatiles are removed from the reaction mixture *in vacuo* overnight. The residue is stirred in 50 mL of toluene for 1 hour then filtered through a medium porosity glass frit. The solids are treated with an additional 50 mL of toluene, filtered, and the volatiles from the combined toluene extracts are removed *in vacuo.* The resulting solids are stirred in 20 mL of pentane, allowed to settle, then separated from the supernatant by decanting. The off-white material is dried under vacuum to provide 1.05 g of the trialkylated species, hafnium, [N-[2,6-bis(1-methylethyl)phenyl]-α-[2,4,6-tri(1-methylethyl)phenyl]-5-(carbazol-1-yl)-2-(N'-methyl)imidazol-2-yl)methanaminato (2-)-κ$N^1$, κ$N^2$]tri(methyl) in 51 percent yield.

$^1H$ NMR (500 MHz, 25°C, $C_6D_6$): δ 0.24 (d, J = 7 Hz, 3H), 0.53 (s, 9H), 0.92 (d, J = 7 Hz, 3H), 1.07 (d, J = 7 Hz, 3H), 1.20 (d, J = 7 Hz, 3H), 1.21 (d, J = 7 Hz, 3H), 1.31 (d, J = 7 Hz, 3H), 1.41 (d, J = 7 Hz, 3H), 1.42 (d, J = 7 Hz, 3H), 1.57 (d, J = 7 Hz, 3H), 2.30 (s, 3H), 2.74 (septet, J = 7 Hz, 1H), 2.94 (septet, J = 7 Hz, 1H), 3.61 (septet, J = 7 Hz, 1H), 3.67 (septet, J = 7 Hz, 1H), 3.99 (septet, J = 7 Hz, 1H), 5.58 (s, 1H), 6.31 (s, 1H), 6.95 (d, J = 2 Hz, 1H), 7.09-7.34 (multiplets, 7H), 7.53 (td, J = 7, 1 Hz, 1H), 7.62 (d, J = 8 Hz, 1H), 8.04 (apparent t, J = 8 Hz, 2H).

**Example 2: Hafnium, [N-[2,6-bis(1-methylethyl)phenyl]-α-[2,4,6-tri(ethyl)phenyl]-5-(carbazol-1-yl)-2-(N'-methyl)imidazol-2-yl)methanaminato (2-)-κN¹, κN²]tri(methyl)**

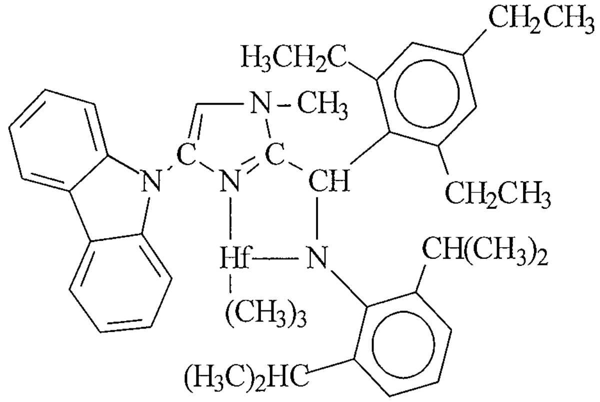

Under an $N_2$ atmosphere, a glass flask is charged with 3.02 mmol of 2-(1)N-methyl imidazolemethanamine-N-[2,6-(diisopropyl)phenyl]-α-[2,4,6-tri(ethyl)phenyl]-4-(N-carbazole) and 75 mL of toluene is added. To this solution is added 3.05 mmol of n-BuLi (2.03 M solution in cyclohexane) dropwise by syringe and the solution is stirred overnight at ambient temperature. To this solution is added 3.02 mmol of solid $HfCl_4$ in one portion. The mixture heated gradually to 105 °C over 30 minutes, then held at this temperature for 2.5 hours. After cooling, 10.2 mmol of MeMgBr (3.4 equivalents, 3.0 M solution in diethyl ether) is added dropwise by syringe and the resulting mixture stirred 40 minutes at ambient temperature. The volatiles are removed from the reaction mixture in vacuo overnight. The residue is stirred in 50 mL of toluene for 30 minutes then filtered through a medium porosity glass frit. The solids are treated with an additional 50 mL of toluene, filtered, and the volatiles from the combined toluene extracts are removed in vacuo overnight. The resulting solids are stirred in 15 mL of pentane, allowed to settle, then separated from the supernatant by decanting. After washing two times with an additional 15-20 mL of pentane the flesh colored solid is dried in vacuo to provide 1.52 g of the trialkylated species in 61.5 percent yield.

$^1H$ NMR (500 MHz, 25 °C, $C_6D_6$): δ 0.28 (d, J = 7 Hz, 3H), 0.29 (s, 9H), 0.84 (t, J = 8 Hz, 3H), 1.15 (t, J = 8 Hz, 3H), 1.30 (t, J = 8 Hz, 3H), 1.31 (d, J = 7 Hz, 3H), 1.45 (d, J = 7 Hz, 3H), 1.47 (d, J = 7 Hz, 3H), 2.07 (m, 1H), 2.25 (s, 3H), 2.30 (m, 2H), 2.46 (apparent q, J = 8 Hz, 2H), 3.48 (septet, J = 7 Hz, 1H), 3.52 (m, 1H), 3.75 (septet, J = 7 Hz, 1H), 5.69 (s, 1H), 6.20 (s, 1H), 6.68 (d, J = 7 Hz, 1H), 7.01 (d, J = 7 Hz, 1H), 7.02-7.40 (multiplets, 7H), 7.45 (d, J = 7 Hz, 1H), 7.53 (apparent t, J = 7 Hz, 1H), 8.05 (apparent t, J = 7 Hz, 1H).

**Catalyst Support Preparation**

A toluene solution of MAO (methylaluminoxane; Akzo Nobel) is added to precalcined silica of 25 μm average particle size (757, available from Ineos, Inc.) followed by isolation and drying as described in US patent application 2004/0220051(A1). The calcination temperature is 200 °C and the percent of MAO on support after preparation is approximately 35 percent (6.0 umol Al/g).

**Batch Reactor Propylene Homopolymerizations**

Polymerizations are conducted in a computer controlled, stirred, 3.8 L stainless steel autoclave. Temperature control is maintained by heating or cooling an integrated reactor jacket with circulated water. The top of the reactor is unbolted after each run so that the contents can be emptied after venting the volatiles. All chemicals used for polymerization or catalyst preparation are run through purification columns to remove impurities. Propylene and solvents are passed through 2 columns, the first containing alumina, the second containing a purifying reactant (Q5™ available from Engelhard Corporation). Nitrogen and hydrogen gases are passed through a single column containing Q5™ reactant.

After attachment of the reactor head to the bottom, the reactor is purged with nitrogen while being heated to 140 °C and then while cooling to approximately 30 °C. The reactor is then filled with a 3-5 weight percent solution of triethylaluminum in isooctane and agitated for 45 minutes. This scavenging solution is then flushed to a recovery tank and the reactor is filled with 1370 g of propylene. The desired amount of hydrogen, typically 2337 $cm^3$ (0 °C; 0.1 MPa), is added using a Brooks flow meter and the reactor is brought to 62 °C. The catalyst is injected as a slurry in oil or light hydrocarbon and the injector is flushed with isooctane three time to ensure complete delivery. After injection, the reactor

temperature is ramped to 67 °C over 5 minutes, or maintained at 67 °C *via* cooling in the case of large exotherms. After a run time of 1 hour, the reactor is cooled to ambient temperature, vented, then the head is removed and the contents emptied. Polymer weights are measured after drying overnight or to constant weight in a ventilated fume hood.

The catalyst slurry is prepared by premixing the desired quantities of a stock solution of the metal complex in toluene (0.01 or 0.005 M) and the solid catalyst support in 5 mL of isooctane for 30 minutes providing a molar ratio Al/Hf of 200 and 120. All manipulations are performed in an inert atmosphere glovebox. After preparation, the catalyst slurry is loaded into the reactor injector from a septa-capped vial using an integrated needle, then injected into the reactor. Results are contained in Tables 1-2.

Table 1 (200:1 Al:Hf)

| Run | Complex (μmol) | Support (mg) | Yield (g) | Efficiency (kg poly/g Hf) |
|---|---|---|---|---|
| 1 | Ex. 1 (6.0) | A (200) | 381.5 | 356 |
| 2 | Ex. 1 (6.0) | A (200) | 318.7 | 298 |
| 3 | Ex. 2 (6.0) | A (200) | 157.0 | 147 |
| 4 | Ex. 2 (6.0) | A (200) | 210.6 | 197 |

Table 2 (120:1 Al:Hf)

| Run | Complex (μmol) | Support (mg) | Yield (g) | Efficiency (kg poly/g Hf) |
|---|---|---|---|---|
| 5 | Ex. 1 (5.0) | A (100) | 221.5 | 248 |
| 6 | Ex. 1 (5.0) | A (100) | 162.9 | 183 |
| 7 | Ex. 2 (10.0) | A (200) | 283.4 | 159 |
| 8 | Ex. 2 (10.0) | A (200) | 304.0 | 170 |

**Example 2: Hafnium, [N-[2,6-bis(1-methylethyl)phenyl]-α-[2,4,6-tri(ethyl)phenyl]-5-(carbazol-1-yl)-2-(N'-methyl)imidazol-2-yl)methanaminato (2-)-κN1, κN2]tri(methyl)**

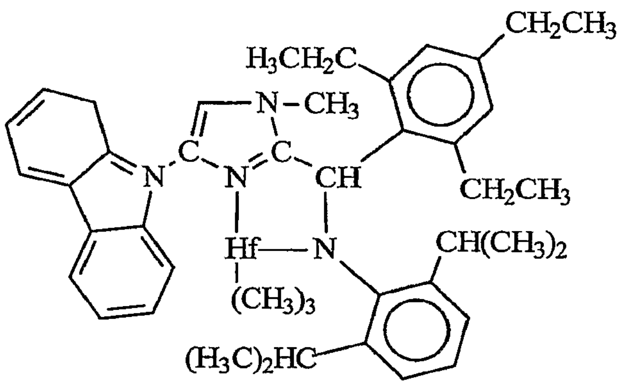

Under an $N_2$ atmosphere, a glass flask is charged with 3.02 mmol of 2-(1)N-methyl imidazolemethanamine-N-[2,6-(diisopropyl)phenyl]-α-[2,4,6-tri(ethyl)phenyl]-4-(N-carbazole) and 75 mL of toluene is added. To this solution is added 3.05 mmol of n-BuLi (2.03 M solution in cyclohexane) dropwise by syringe and the solution is stirred overnight at ambient temperature. To this solution is added 3.02 mmol of solid $HfCl_4$ in one portion. The mixture heated gradually to 105 °C over 30 minutes, then held at this temperature for 2.5 hours. After cooling, 10.2 mmol of MeMgBr (3.4 equivalents, 3.0 M solution in diethyl ether) is added dropwise by syringe and the resulting mixture stirred 40 minutes at ambient temperature. The volatiles are removed from the reaction mixture in vacuo overnight. The residue is stirred in 50 mL of toluene for 30 minutes then filtered through a medium porosity glass frit. The solids are treated with an additional 50 mL of toluene, filtered, and the volatiles from the combined toluene extracts are removed in vacuo overnight. The resulting

solids are stirred in 15 mL of pentane, allowed to settle, then separated from the supernatant by decanting. After washing two times with an additional 15-20 mL of pentane the flesh colored solid is dried in vacuo to provide 1.52 g of the trialkylated species in 61.5 percent yield.

$^1H$ NMR (500 MHz, 25 °C, $C_6D_6$): δ 0.28 (d, J = 7 Hz, 3H), 0.29 (s, 9H), 0.84 (t, J = 8 Hz, 3H), 1.15 (t, J = 8 Hz, 3H), 1.30 (t, J = 8 Hz, 3H), 1.31 (d, J = 7 Hz, 3H), 1.45 (d, J = 7 Hz, 3H), 1.47 (d, J = 7 Hz, 3H), 2.07 (m, 1H), 2.25 (s, 3H), 2.30 (m, 2H), 2.46 (apparent q, J = 8 Hz, 2H), 3.48 (septet, J = 7 Hz, 1H), 3.52 (m, 1H), 3.75 (septet, J = 7 Hz, 1H), 5.69 (s, 1H), 6.20 (s, 1H), 6.68 (d, J = 7 Hz, 1H), 7.01 (d, J = 7 Hz, 1H), 7.02-7.40 (multiplets, 7H), 7.45 (d, J = 7 Hz, 1H), 7.53 (apparent t, J = 7 Hz, 1H), 8.05 (apparent t, J = 7 Hz, 1H).

**Catalyst Support Preparation**

A toluene solution of MAO (methylaluminoxane; Akzo Nobel) is added to precalcined silica of 25 μm average particle size (757, available from Ineos, Inc.) followed by isolation and drying as described in US patent application 2004/0220051(A1). The calcination temperature is 200 °C and the percent of MAO on support after preparation is approximately 35 percent (6.0 umol Al/g).

**Batch Reactor Propylene Homopolymerizations**

Polymerizations are conducted in a computer controlled, stirred, 3.8 L stainless steel autoclave. Temperature control is maintained by heating or cooling an integrated reactor jacket with circulated water. The top of the reactor is unbolted after each run so that the contents can be emptied after venting the volatiles. All chemicals used for polymerization or catalyst preparation are run through purification columns to remove impurities. Propylene and solvents are passed through 2 columns, the first containing alumina, the second containing a purifying reactant (Q5™ available from Engelhard Corporation). Nitrogen and hydrogen gases are passed through a single column containing Q5™ reactant.

After attachment of the reactor head to the bottom, the reactor is purged with nitrogen while being heated to 140 °C and then while cooling to approximately 30 °C. The reactor is then filled with a 3-5 weight percent solution of triethylaluminum in isooctane and agitated for 45 minutes. This scavenging solution is then flushed to a recovery tank and the reactor is filled with 1370 g of propylene. The desired amount of hydrogen, typically 2337 $cm^3$ (0 °C; 0.1 MPa), is added using a Brooks flow meter and the reactor is brought to 62 °C. The catalyst is injected as a slurry in oil or light hydrocarbon and the injector is flushed with isooctane three time to ensure complete delivery. After injection, the reactor temperature is ramped to 67 °C over 5 minutes, or maintained at 67 °C *via* cooling in the case of large exotherms. After a run time of 1 hour, the reactor is cooled to ambient temperature, vented, then the head is removed and the contents emptied. Polymer weights are measured after drying overnight or to constant weight in a ventilated fume hood.

The catalyst slurry is prepared by premixing the desired quantities of a stock solution of the metal complex in toluene (0.01 or 0.005 M) and the solid catalyst support in 5 mL of isooctane for 30 minutes providing a molar ratio Al/Hf of 200 and 120. All manipulations are performed in an inert atmosphere glovebox. After preparation, the catalyst slurry is loaded into the reactor injector from a septa-capped vial using an integrated needle, then injected into the reactor. Results are contained in Tables 1-2.

Table 1 (200:1 Al:Hf)

| Run | Complex (μmol) | Support (mg) | Yield (g) | Efficiency (kg poly/g Hf) |
|---|---|---|---|---|
| 1 | Ex. 1 (6.0) | A (200) | 381.5 | 356 |
| 2 | Ex. 1 (6.0) | A (200) | 318.7 | 298 |
| 3 | Ex. 2 (6.0) | A (200) | 157.0 | 147 |
| 4 | Ex. 2 (6.0) | A (200) | 210.6 | 197 |

Table 2 (120:1 Al:Hf)

| Run | Complex (μmol) | Support (mg) | Yield (g) | Efficiency (kg poly/g Hf) |
|---|---|---|---|---|
| 5 | Ex. 1 (5.0) | A (100) | 221.5 | 248 |
| 6 | Ex. 1 (5.0) | A (100) | 162.9 | 183 |
| 7 | Ex. 2 (10.0) | A (200) | 283.4 | 159 |
| 8 | Ex. 2 (10.0) | A (200) | 304.0 | 170 |

## Claims

1. A catalyst composition suitable for use in the coordination polymerization of an olefin comprising a metal complex corresponding to the formula:

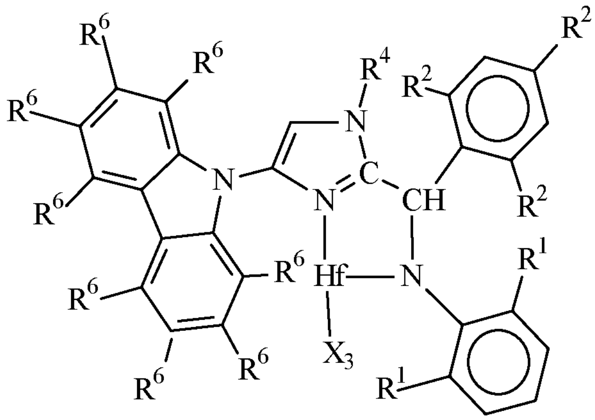

wherein, X independently each occurrence is hydride, halide or a $C_{1-20}$ hydrocarbyl, trihydrocarbylsilyl, halocarbyl, or trihydrocarbylsilylhydrocarbyl group;
$R^1$ independently each occurrence is hydrogen, halogen, or a univalent, polyatomic anionic ligand, or two or more $R^1$ groups are joined together thereby forming a polyvalent fused ring system;
$R^2$ independently each occurrence is hydrogen, halogen, or a univalent, polyatomic anionic ligand, or two or more $R^2$ groups are joined together thereby forming a polyvalent fused ring system;
$R^4$ is hydrogen, alkyl, aryl, aralkyl, trihydrocarbylsilyl, or trihydrocarbylsilylmethyl of from 1 to 20 carbons; and
$R^6$ is hydrogen or an alkyl, cycloalkyl, aryl, or aralkyl group of up to 20 atoms other than hydrogen;
an activating cocatalyst; and
a support, wherein the support is a particulated compound selected from the oxides, sulfides, nitrides or carbides of a Group 13 or 14 metal or metalloid.

2. A catalyst composition according to claim 1 wherein $R^4$ is $C_{1-4}$ alkyl, $R^6$ each occurrence is hydrogen, and X each occurrence is $C_{1-20}$ alkyl, cycloalkyl or aralkyl.

3. A catalyst composition according to claim 2 wherein all X groups are the same and are methyl, benzyl, n-butyl, n-octyl or n-dodecyl.

4. A catalyst composition according to claim 2 wherein the metal complex corresponds to the formula:

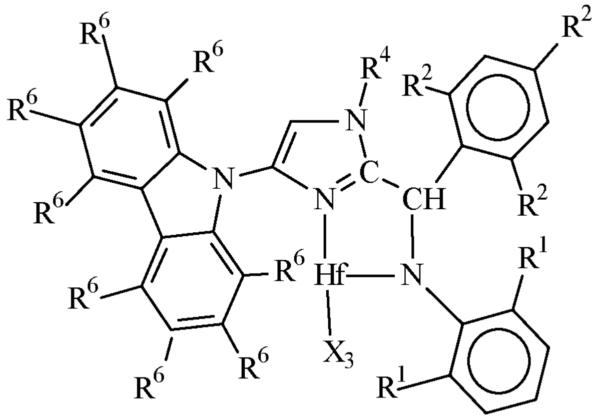

,

wherein,

$R^1$ independently each occurrence is isopropyl;

$R^2$ independently each occurrence is a $C_{1-12}$ alkyl group;
$R^4$ is $C_{1-4}$ alkyl;
$R^6$ is hydrogen, $C_{1-6}$ alkyl or cycloalkyl; and
X independently each occurrence is methyl, benzyl, n-butyl or n-octyl.

**5.** The catalyst composition according to claim 1, wherein the metal complex is selected from the group consisting of:

hafnium, [N-[2,6-bis(1-methylethyl)phenyl]-α-[2,4,6-tri(1-methylethyl)phenyl]-5-(carbazol-1-yl)-2-(N'-methyl)imidazol-2-yl)methanaminato (2-)-κ$N^1$, κ$N^2$]tri(methyl),
hafnium, [N-[2,6-bis(1-methylethyl)phenyl]-α-[2,4,6-tri(1-methylethyl)phenyl]-5-(carbazol-1-yl)-2-(N'-methyl)imidazol-2-yl)methanaminato (2-)-κ$N^1$, κ$N^2$]tri(benzyl),
hafnium, [N-[2,6-bis(1-methylethyl)phenyl]-α-[2,4,6-tri(ethyl)phenyl]-5-(carbazol-1-yl)-2-(N'-methyl)imidazol-2-yl)methanaminato (2-)-κ$N^1$, κ$N^2$]tri(methyl),
hafnium, [N-[2,6-bis(1-methylethyl)phenyl]-α-[2,4,6-tri(ethyl)phenyl]-5-(carbazol-1-yl)-2-(N'-methyl)imidazol-2-yl)methanaminato (2-)-κ$N^1$, κ$N^2$]tri(benzyl), and mixtures thereof.

**6.** The catalyst composition according to any one of claims 1 to 5 wherein the activating cocatalyst is a Lewis acid.

**7.** The catalyst composition according to claim 6 wherein the Lewis acid is methylalumoxane or modified methylalumoxane.

**8.** A catalyst composition according to any one of claims 1 to 7 wherein the support is silica containing methylalumoxane in physical admixture and having the metal complex deposited on the surface of the support.

**9.** An addition polymerization process comprising contacting one or more olefin monomers under polymerization conditions with a catalyst composition according to any one of claims 1 to 8.

**10.** A process according to claim 9 which is a solution polymerization process.

**Patentansprüche**

**1.** Eine Katalysatorzusammensetzung, die zur Verwendung bei der Koordinationspolymerisation eines Olefins geeignet ist, beinhaltend einen Metallkomplex, der der folgenden Formel entspricht:

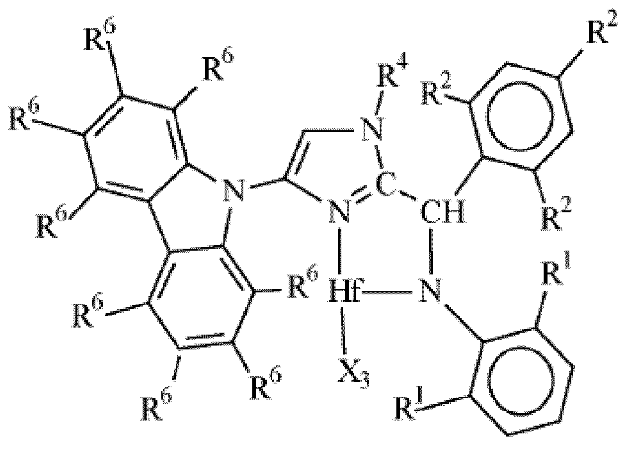

wobei X unabhängig bei jedem Auftreten Hydrid, Halogenid oder eine $C_{1-20}$-Hydrocarbyl-, $C_{1-20}$-Trihydrocarbylsilyl-, $C_{1-20}$-Halogencarbyl- oder $C_{1-20}$-Trihydrocarbylsilylhydrocarbylgruppe ist;
$R^1$ unabhängig bei jedem Auftreten Wasserstoff, Halogen oder ein einwertiger, mehratomiger anionischer Ligand ist, oder zwei oder mehr $R^1$-Gruppen miteinander verbunden sind, wodurch sie ein mehrwertiges kondensiertes Ringsystem bilden;
$R^2$ unabhängig bei jedem Auftreten Wasserstoff, Halogen oder ein einwertiger, mehratomiger anionischer Ligand ist, oder zwei oder mehr $R^2$-Gruppen miteinander verbunden sind, wodurch sie ein mehrwertiges kondensiertes Ringsystem bilden;

$R^4$ Wasserstoff, Alkyl, Aryl, Aralkyl, Trihydrocarbylsilyl oder Trihydrocarbylsilylmethyl von 1 bis 20 Kohlenstoffen ist; und
$R^6$ Wasserstoff oder eine Alkyl-, Cycloalkyl-, Aryl- oder Aralkylgruppe von bis zu 20 Atomen abgesehen von Wasserstoff ist;
einen aktivierenden Cokatalysator; und
einen Träger, wobei der Träger eine partikelförmige Verbindung ist, ausgewählt aus den Oxiden, Sulfiden, Nitriden oder Carbiden eines Metalls oder Halbmetalls der Gruppe 13 oder 14.

**2.** Katalysatorzusammensetzung gemäß Anspruch 1, wobei $R^4$ $C_{1-4}$-Alkyl ist, $R^6$ bei jedem Auftreten Wasserstoff ist und X bei jedem Auftreten $C_{1-20}$-Alkyl, $C_{1-20}$-Cycloalkyl oder $C_{1-20}$-Aralkyl ist.

**3.** Katalysatorzusammensetzung gemäß Anspruch 2, wobei alle X-Gruppen gleich sind und Methyl, Benzyl, n-Butyl, n-Octyl oder n-Dodecyl sind.

**4.** Katalysatorzusammensetzung gemäß Anspruch 2, wobei der Metallkomplex der folgenden Formel entspricht:

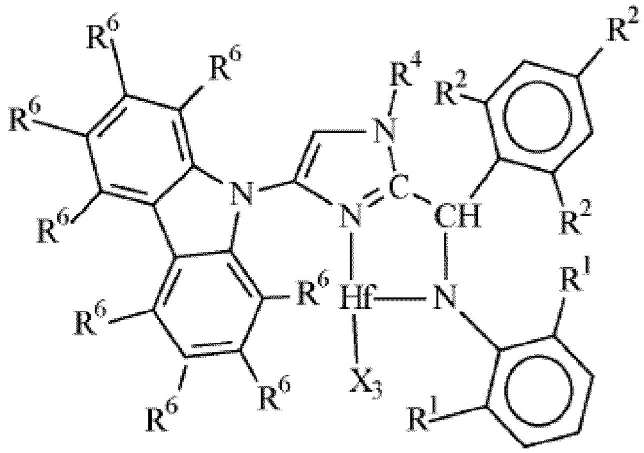

wobei

$R^1$ unabhängig bei jedem Auftreten Isopropyl ist;
$R^2$ unabhängig bei jedem Auftreten eine $C_{1-12}$-Alkylgruppe ist;
$R^4$ $C_{1-4}$-Alkyl ist;
$R^6$ Wasserstoff, $C_{1-6}$-Alkyl oder $C_{1-6}$-Cycloalkyl ist; und
X unabhängig bei jedem Auftreten Methyl, Benzyl, n-Butyl oder n-Octyl ist.

**5.** Katalysatorzusammensetzung gemäß Anspruch 1, wobei der Metallkomplex aus der Gruppe ausgewählt ist, die aus Folgendem besteht:

Hafnium, [N-[2,6-Bis(1-methylethyl)phenyl]-α-[2,4,6-tri(1-methylethyl)phenyl]-5-(carbazol-1-yl)-2-(N'-methyl)imidazol-2-yl)methanaminato(2-)-κ$N^1$,κ$N^2$]tri(methyl),
Hafnium, [N-[2,6-Bis(1-methylethyl)phenyl]-α-[2,4,6-tri(1-methylethyl)phenyl]-5-(carbazol-1-yl)-2-(N'-methyl)imidazol-2-yl)methanaminato(2-)-κ$N^1$,κ$N^2$]tri(benzyl),
Hafnium, [N-[2,6-Bis(1-methylethyl)phenyl]-α-[2,4,6-tri(ethyl)phenyl]-5-(carbazol-1-yl)-2-(N'-methyl)imidazol-2-yl)methanaminato(2-)-κ$N^1$,κ$N^2$]tri(methyl),
Hafnium, [N-[2,6-Bis(1-methylethyl)phenyl]-a-[2,4,6-tri(ethyl)phenyl]-5-(carbazol-1-yl)-2-(N'-methyl)imidazol-2-yl)methanaminato(2-)-κ$N^1$,κ$N^2$]tri(benzyl) und Mischungen davon.

**6.** Katalysatorzusammensetzung gemäß einem der Ansprüche 1 bis 5, wobei der aktivierende Cokatalysator eine Lewis-Säure ist.

**7.** Katalysatorzusammensetzung gemäß Anspruch 6, wobei die Lewis-Säure Methylalumoxan oder modifiziertes Methylalumoxan ist.

8. Katalysatorzusammensetzung gemäß einem der Ansprüche 1 bis 7, wobei der Träger Siliciumdioxid ist, das Methylalumoxan in physischer Beimischung enthält und den Metallkomplex auf der Oberfläche des Trägers abgelagert aufweist.

9. Ein Additionspolymerisationsverfahren, das das In-Kontakt-Bringen eines oder mehrerer Olefinmonomere unter Polymerisationsbedingungen mit einer Katalysatorzusammensetzung gemäß einem der Ansprüche 1 bis 8 beinhaltet.

10. Verfahren gemäß Anspruch 9, das ein Lösungspolymerisationsverfahren ist.

**Revendications**

1. Une composition de catalyseur convenant pour être utilisée dans la polymérisation par coordination d'une oléfine comprenant
un complexe métallique correspondant à la formule :

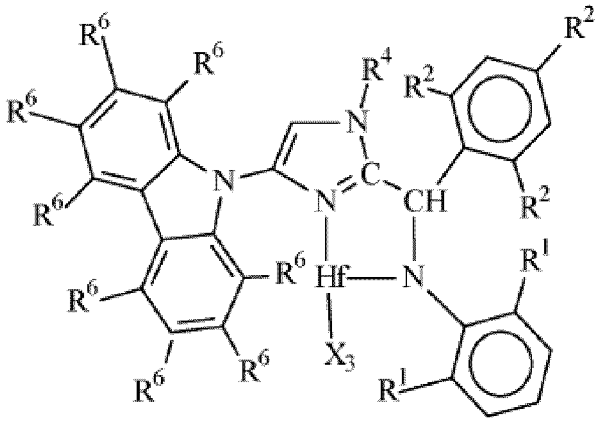

dans laquelle, X est indépendamment à chaque occurrence un hydrure, un halogénure ou un groupe hydrocarbyle, trihydrocarbylsilyle, halocarbyle, ou trihydrocarbylsilylhydrocarbyle en $C_{1-20}$ ;
$R^1$ est indépendamment à chaque occurrence l'hydrogène, un halogène, ou un ligand anionique polyatomique univalent, ou deux groupes $R^1$ ou plus sont réunis, formant de ce fait un système à cycles condensés polyvalent ;
$R^2$ est indépendamment à chaque occurrence l'hydrogène, un halogène, ou un ligand anionique polyatomique univalent, ou deux groupes $R^2$ ou plus sont réunis, formant de ce fait un système à cycles condensés polyvalent ;
$R^4$ est l'hydrogène, un alkyle, un aryle, un aralkyle, un trihydrocarbylsilyle, ou un trihydrocarbylsilylméthyle de 1 à 20 carbones ; et
$R^6$ est l'hydrogène ou un groupe alkyle, cycloalkyle, aryle, ou aralkyle de jusqu'à 20 atomes autres que l'hydrogène ;
un cocatalyseur activateur ; et
un support, le support étant un composé à particules sélectionné parmi les oxydes, les sulfures, les nitrures ou les carbures d'un métal ou métalloïde du Groupe 13 ou du Groupe 14.

2. Une composition de catalyseur selon la revendication 1 dans laquelle $R^4$ est un alkyle en $C_{1-4}$, $R^6$ est à chaque occurrence l'hydrogène, et X est à chaque occurrence un alkyle, cycloalkyle ou aralkyle en $C_{1-20}$.

3. Une composition de catalyseur selon la revendication 2 dans laquelle tous les groupes X sont les mêmes et sont un méthyle, un benzyle, un n-butyle, un n-octyle ou un n-dodécyle.

4. Une composition de catalyseur selon la revendication 2 dans laquelle le complexe métallique correspond à la formule :

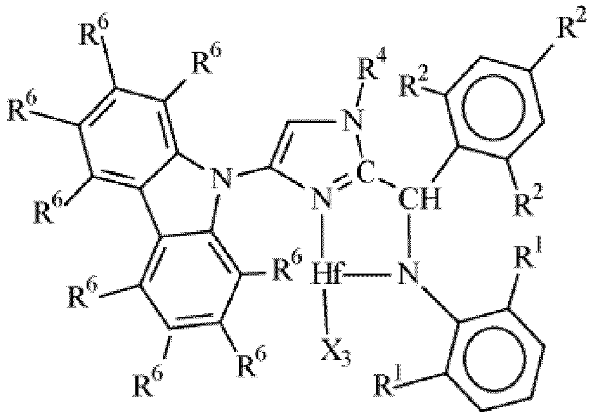

dans laquelle,

$R^1$ est indépendamment à chaque occurrence un isopropyle ;
$R^2$ est indépendamment à chaque occurrence un groupe alkyle en $C_{1-12}$ ;
$R^4$ est un alkyle en $C_{1-4}$ ;
$R^6$ est l'hydrogène, un alkyle ou un cycloalkyle en $C_{1-6}$ ; et
X est indépendamment à chaque occurrence un méthyle, un benzyle, un n-butyle ou un n-octyle.

**5.** La composition de catalyseur selon la revendication 1, dans laquelle le complexe métallique est sélectionné dans le groupe consistant en :

le [N-[2,6-bis(1-méthyléthyl)phényl]-α-[2,4,6-tri(1-méthyléthyl)phényl]-5-(carbazol-1-yl)-2-(N'-méthyl)imidazol-2-yl)méthanaminato (2-)-κ$N^1$, κ$N^2$]tri(méthyle) de hafnium,
le [N-[2,6-bis(1-méthyléthyl)phényl]-α-[2,4,6-tri(1-méthyléthyl)phényl]-5-(carbazol-1-yl)-2-(N'-méthyl)imidazol-2-yl)méthanaminato (2-)-κ$N^1$, κ$N^2$]tri(benzyle) de hafnium,
le [N-[2,6-bis(1-méthyléthyl)phényl]-α-[2,4,6-tri(éthyl)phényl]-5-(carbazol-1-yl)-2-(N'-méthyl)imidazol-2-yl)méthanaminato (2-)-κ$N^1$, κ$N^2$]tri(méthyle) de hafnium,
le [N-[2,6-bis(1-méthyléthyl)phényl]-α-[2,4,6-tri(éthyl)phényl]-5-(carbazol-1-yl)-2-(N'-méthyl)imidazol-2-yl)méthanaminato (2-)-κ$N^1$, κ$N^2$]tri(benzyle) de hafnium, et des mélanges de ceux-ci.

**6.** La composition de catalyseur selon l'une quelconque des revendications 1 à 5 dans laquelle le cocatalyseur activateur est un acide de Lewis.

**7.** La composition de catalyseur selon la revendication 6 dans laquelle l'acide de Lewis est un méthylalumoxane ou un méthylalumoxane modifié.

**8.** Une composition de catalyseur selon l'une quelconque des revendications 1 à 7 dans laquelle le support est une silice contenant un méthylalumoxane en mélange additionnel physique et le complexe métallique a été déposé sur la surface du support.

**9.** Un procédé de polymérisation par addition comprenant la mise en contact d'un ou de plusieurs monomères oléfiniques dans des conditions de polymérisation avec une composition de catalyseur selon l'une quelconque des revendications 1 à 8.

**10.** Un procédé selon la revendication 9 qui est un procédé de polymérisation en solution.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6103657 A
- US 6320005 B
- US 6653417 B
- US 6637660 B
- US 6906160 B
- US 6919407 B
- US 6927256 B
- US 6953764 B
- US 20020142912 A
- US 20040220050 A
- US 20040005984 A
- EP 874005 A
- EP 791609 A
- WO 200020377 A
- WO 200130860 A
- WO 200146201 A
- WO 200224331 A
- WO 200238628 A
- WO 2003040195 A
- WO 200494487 A
- WO 200620624 A
- WO 200636748 A
- US 5504172 A
- WO 0001745 A
- US 4665208 A
- US 4952540 A
- US 5091352 A
- US 5206199 A
- US 5204419 A
- US 4874734 A
- US 4924018 A
- US 4908463 A
- US 4968827 A
- US 5308815 A
- US 5329032 A
- US 5248801 A
- US 5235081 A
- US 5157137 A
- US 5103031 A
- US 5391793 A
- US 5391529 A
- US 5693838 A
- US 5731253 A
- US 5731451 A
- US 5744656 A
- EP 561476 A
- EP 279586 A
- EP 594218 A
- WO 9410180 A
- WO 9843983 A
- EP 570982 A
- EP 520732 A
- EP 495375 A
- EP 500944 A
- EP 277003 A
- EP 277004 A
- US 5153157 A
- US 5198401 A
- US 5066741 A
- US 5206197 A
- US 5241025 A
- US 5384299 A
- US 5502124 A
- EP 426637 A
- EP 573403 A
- US 5387568 A
- US 6395671 B
- WO 9807515 A
- EP 0573120 A
- WO 9407928 A
- WO 9514044 A
- US 5453410 A
- WO 9809996 A
- WO 9918135 A
- EP 781299 A
- US 5849852 A
- US 5859653 A
- US 5869723 A
- EP 615981 A
- WO 9832775 A
- US 5712352 A
- US 5763543 A
- WO 9608520 A
- US 6306984 B
- US 4701432 A
- US 4808561 A
- US 4912075 A
- US 4925821 A
- US 4937217 A
- US 5008228 A
- US 5238892 A
- US 5240894 A
- US 5332706 A
- US 5346925 A
- US 5422325 A
- US 5466649 A
- US 5466766 A
- US 5468702 A

- US 5529965 A
- US 5554704 A
- US 5629253 A
- US 5639835 A
- US 5625015 A
- US 5643847 A
- US 5665665 A
- US 5698487 A
- US 5714424 A
- US 5723400 A
- US 5723402 A
- US 5731261 A
- US 5759940 A
- US 5767032 A
- US 5770664 A
- WO 9532995 A
- WO 9606187 A
- WO 9702297 A
- US 4894424 A
- US 4376062 A
- US 4395359 A
- US 4379759 A
- US 4405495 A
- US 4540758 A
- US 5096869 A
- US 5473202 A
- US 5770755 A
- EP 802203 A
- US 5688880 A
- WO 9611960 A
- WO 9600245 A
- WO 9600243 A
- US 5648310 A
- US 4937299 A
- US 4935474 A
- US 5281679 A
- US 5359015 A
- US 5470811 A
- US 5719241 A
- US 4159965 A
- US 4325837 A
- US 5124418 A
- US 5077255 A
- US 5183867 A
- US 5391660 A
- US 5395810 A
- US 5691264 A
- US 5723399 A
- US 5767031 A
- WO 9623010 A
- US 4115639 A
- US 4077904 A
- US 4482687 A
- US 4564605 A
- US 4721763 A
- US 4879359 A
- US 4960741 A
- US 4302565 A
- US 4302566 A
- US 6124507 A
- US 2285721 A
- US 3242099 A
- US 3231550 A
- US 4124532 A
- US 5763723 A
- EP 416815 A
- EP 420436 A
- US 3221002 A
- US 5093415 A
- US 4530914 A
- US 4871705 A
- US 5017714 A
- US 5055438 A
- US 5096867 A
- US 5120867 A
- US 5210352 A
- US 5229478 A
- US 5264405 A
- US 5278264 A
- US 5278119 A
- US 5304614 A
- US 5324800 A
- US 5347025 A
- US 5350723 A
- US 5391790 A
- US 5391789 A
- US 5399636 A
- US 5408017 A
- US 5491207 A
- US 5455366 A
- US 5534473 A
- US 5539124 A
- US 5554775 A
- US 5621126 A
- US 5684098 A
- US 5693730 A
- US 5698634 A
- US 5710297 A
- US 5712354 A
- US 5714427 A
- US 5714555 A
- US 5728641 A
- US 5728839 A
- US 5753577 A
- US 5767209 A
- US 5770753 A
- EP 0591756 A
- EP 0520732 A
- EP 0420436 A
- EP 0485822 A
- EP 0485823 A
- EP 0743324 A
- EP 0518092 A
- WO 9104257 A
- WO 9200333 A
- WO 9308221 A

- WO 9308199 A
- WO 9401471 A
- WO 9620233 A
- WO 9715582 A
- WO 9719959 A
- WO 9746567 A
- WO 9801455 A
- WO 9806759 A
- WO 98011144 A
- US 5703187 A
- US 5965756 A
- US 6150297 A
- US 5064802 A
- US 5145819 A
- US 5149819 A
- US 5243001 A
- US 5239022 A
- US 5276208 A
- US 5296434 A
- US 5321106 A
- US 5329031 A
- US 5677401 A
- US 5723398 A
- WO 9507140 A
- WO 9811144 A
- WO 0202577 A
- WO 0238628 A
- EP 578838 A
- EP 638595 A
- EP 513380 A
- EP 816372 A
- US 5527752 A
- US 5747406 A
- EP 735057 A
- WO 9633202 A
- WO 9901481 A
- WO 9842664 A
- US 5637660 A
- WO 9748735 A
- EP 0816384 A
- US 5851945 A
- US 5852146 A
- WO 9846651 A
- WO 9920665 A
- US 4748221 A
- US 4789359 A
- US 4923833 A
- US 4921825 A
- US 5283278 A
- US 5705578 A
- EP 279863 A
- WO 9744371 A
- US 4543399 A
- US 4588790 A
- US 5028670 A
- US 5317036 A
- US 5352749 A
- US 5405922 A
- US 5436304 A
- US 5453471 A
- US 5462999 A
- US 5616661 A
- US 5668228 A
- US 3248179 A
- US 4613484 A
- US 4271060 A
- US 5001205 A
- US 5236998 A
- US 5589555 A
- US 20040220051 A1


**Non-patent literature cited in the description**


- Periodic Table of the Elements. CRC Press, Inc, 2003
- **INNES.** Total Porosity and Particle Density of Fluid Catalysts By Liquid Titration. *Analytical Chemistry,* 1956, vol. 28, 332-334
- **JOHNSON et al.** New Pd(II)- and Ni(II)-Based Catalysts for Polymerization of Ethylene and a-Olefins. *J.A.C.S.,* 1995, vol. 117, 6414-6415
- **JOHNSON et al.** Copolymerization of Ethylene and Propylene with Functionalized Vinyl Monomers by Palladium(II) Catalysts. *J.A.C.S.,* 1996, vol. 118, 267-268
- **GIBSON et al.** *Chem. Comm.,* 1998, 849-850
- **D. H. MCCONVILLE et al.** *Organometallics,* 1995, vol. 14, 5478-5480
- *J. Appl. Polym. Sci.,* 1984, vol. 29, 3763-3782
- *Macromolecules,* 1971, vol. 4, 507
- Thermal Characterization of Polymeric Materials. Academic Press, 1981
- **L. WILD et al.** *Journal of Polymer Science: Polymer. Physics Ed.,* 1982, vol. 20, 441
- **HAZLITT.** *Journal of Applied Polymer Science: Appl. Polym. Symp.,* 1990, vol. 45, 25